# EUROPÄISCHE PATENTANMELDUNG

(11) **EP 3 828 857 A1**
(43) Veröffentlichungstag der Anmeldung: **02.06.2021**
(21) Anmeldenummer: 19212286.9
(22) Anmeldetag: 28.11.2019
(51) Int. Cl.: G08B 25/00, E05B 41/00, E05B 45/08, E05B 47/00, G01B 7/04, G07C 9/00, G08B 25/08, G08B 25/10, H04W 52/02

(54) **SENSORSYSTEM**

(71) Anmelder: dormakaba Schweiz AG, 8623 Wetzikon (CH)
(72) Erfinder: Mosberger, Philippe, CH 8623 Wetzikon (CH); Wyss, Stefan, CH 812 Maur (CH); Hofmann, Jan, CH 8623 Wetzikon (CH)
(74) Vertreter: Balder IP Law, S.L.

(57) **Zusammenfassung**

Die Erfindung betrifft Sensorsystem (60) für ein Verschlusselement (3), insbesondere eine Tür oder ein Fenster, mit einer Sensorvorrichtung (1), die einen Sensor (20) umfasst, und mit einem Energiespeicher (45) zur Stromversorgung des Sensors (20), wobei eine Aktivität des Sensors (20) und/oder einer Sende- und/oder Empfangseinheit (63) der Sensorvorrichtung (1) abhängig von einer Zusatzinformation ausgestaltet ist.

## Beschreibung

Die Erfindung betrifft ein Sensorsystem für ein Verschlusselement. Das Sensorsystem umfasst eine Sensorvorrichtung. Bei dem Verschlusselement handelt es sich insbesondere um eine Tür oder ein Fenster.

Eine vorbekannte Sensorvorrichtung zeigt WO 2016/149723 A1, dort als Vorrichtung zum Detektieren bezeichnet. Die dort offenbarte Sensorvorrichtung wird auf dem Stulp eines Einsteckschlusses befestigt.

Es ist Aufgabe vorliegender Erfindung, ein Sensorsystem für ein Verschlusselement, insbesondere eine Tür oder ein Fenster, bereitzustellen, das einfach zu installieren und dennoch wartungsarm ist.

Die Lösung der Aufgabe erfolgt durch die Merkmale des unabhängigen Anspruchs. Die abhängigen Ansprüche haben vorteilhafte Ausgestaltungen der Erfindung zum Gegenstand.

Somit wird die Aufgabe gelöst durch ein Sensorsystem für ein Verschlusselement. Bei dem Verschlusselement handelt es sich insbesondere um eine Tür oder ein Fenster. Das Sensorsystem umfasst eine Sensorvorrichtung. Die Sensorvorrichtung kann kabelgebunden oder kabellos mit einer übergeordneten elektronischen Recheneinheit verbunden sein. Das Sensorsystem kann die Sensorvorrichtung und die übergeordneter Recheneinheit umfassen. Allerdings kann die Rechenleistung auch in der Sensorvorrichtung erbracht werden, sodass die übergeordnete Recheneinheit nicht notwendig ist und folglich die Sensorvorrichtung als Sensorsystem ausgebildet ist.

Die optionale Recheneinheit, insbesondere eine Cloud, ist außerhalb der Sensorvorrichtung angeordnet. Die Recheneinheit kann über ein lokales Netzwerk oder das Internet mit der Sensorvorrichtung zur Kommunikation (auch als Datenübertragung bzw. Datenaustausch bezeichnet) verbunden sein. Insbesondere ist vorgesehen, die Recheneinheit weit entfernt von der Sensorvorrichtung anzuordnen.

Das Sensorsystem kann ein insbesondere mobiles Benutzergerät, z. B. einem Mobiltelefon, ein Tablet, einem Laptop umfassen oder zur Kommunikation mit dem mobilen Benutzergerät ausgebildet sein.

Ferner kann das Sensorsystem eine elektronische Erfassungseinheit aufweisen, die außerhalb der Sensorvorrichtung, aber insbesondere in dessen drahtlosem Kommunikationsbereich, angeordnet ist. Die Erfassungseinheit, beispielsweise ausgebildet als Router oder Gateway, kann die datenübertragende Verbindung zwischen der Recheneinheit und der Sensorvorrichtung darstellen. Die Erfassungseinheit kann die datenübertragende Verbindung zwischen dem Benutzergerät und der Sensorvorrichtung darstellen. Die Erfassungseinheit ist vorgesehen, in der Nähe der Sensorvorrichtung angeordnet zu werden. Die Erfassungseinheit ist zur ortsfesten Installation im Kommunikationsbereich der Sensorvorrichtung ausgebildet.

Die Sensorvorrichtung umfasst vorzugsweise eine Sende- und/oder Empfangseinheit. Die Sende- und/oder Empfangseinheit ist zur Kommunikation, also Datenübertragung, insbesondere drahtlos, mit dem Benutzergerät und/oder der Erfassungseinheit und/oder der Recheneinheit ausgebildet.

Die Sende- und/oder Empfangseinheit ist bevorzugt für eine kabellose Nahbereichskommunikation, z. B. Bluetooth Low Energie oder NFC, ausgebildet. Die Sende- und/oder Empfangseinheit ist bevorzugt nur für eine kabellose Nahbereichskommunikation, insbesondere Bluetooth Low Energie oder NFC, ausgebildet. Die Sende- und/oder Empfangseinheit kommuniziert insbesondere mit der Erfassungseinheit über die kabellose Nahbereichskommunikation. Die Erfassungseinheit befindet sich bevorzugt innerhalb des Kommunikationsbereichs der Sende- und/oder Empfangseinheit. Die Recheneinheit befindet sich insbesondere außerhalb des Kommunikationsbereichs der Sende und/oder Empfangseinheit.

Es ist vorgesehen, dass die in der Sensorvorrichtung angeordnete Sende- und/oder Empfangseinheit über die Erfassungseinheit und/oder direkt mit dem Benutzergerät kommuniziert. Die Sende- und/oder Empfangseinheit kann mit dem Benutzergerät unmittelbar kabellos kommunizieren, sofern sich das Benutzergerät in dem Kommunikationsbereich der Sende- und/oder Empfangseinheit befindet.

Darüber hinaus kann auch die Kommunikation von der Sende- und/oder Empfangseinheit über die Erfassungseinheit und die Recheneinheit mit dem Benutzergerät erfolgen. Dies ist insbesondere dann der Fall, wenn das Benutzergerät mit der Recheneinheit über ein externes Netz, insbesondere das Internet oder ein Telekommunikationsnetz, kommuniziert und/oder sich das Benutzergerät außerhalb des Kommunikationsbereichs der Sende- und/oder Empfangseinheit befindet. Die Erfassungseinheit und die Recheneinheit können über das Internet und/oder ein Telekommunikationsnetz verbunden sein.

Die Sensorvorrichtung umfasst einen Sensor. Am Sensor ist vorzugsweise eine Sensorachse definiert.

Der Sensor wiederum umfasst vorzugsweise zumindest eine Spule. Der Einfachheit halber wird im Folgenden stellenweise eine/die Spule beschrieben; dabei ist aber stets zu verstehen, dass vorzugsweise mehrere koaxiale Spulen zur Anwendung kommen. Mit der zumindest einen Spule werden vorzugsweise unterschiedliche Impedanzen und/oder unterschiedliche induzierte Spannungen erfasst. Alternativ ist der Sensor beispielsweise als Lichtschranke ausgebildet, wobei insbesondere Helligkeitsänderungen am Empfänger der Lichtschranke erfasst werden.

Die Spule weist insbesondere zumindest eine Wicklung auf, die sich um eine Spulenachse erstreckt; wobei die Spulenachse der Sensorachse entspricht. Die Spule dient insbesondere dazu, von einem Riegelelement durchdrungen zu werden. Die Spule ist also dazu ausgebildet, von einem Riegelelement durchdrungen zu werden.

Besonders bevorzugt weist der Sensor eine Durchgangsaussparung, rundum die Sensorachse, auf. Die Durchgangsaussparung ist dazu ausgebildet, von dem Riegelelement durchdrungen zu werden. Dabei bewegt sich das Riegelelement vorzugsweise parallel zur Sensorachse. Die bevorzugt verwendete Spule erstreckt sich rund um die Durchgangsaussparung.

Des Weiteren umfasst die Sensorvorrichtung bevorzugt eine Elektrik. Die Elektrik ist insbesondere zur Stromversorgung und/oder Ansteuerung des Sensors, insbesondere der Spule(n), ausgebildet. Vorzugsweise ist die Elektrik zumindest teilweise elektrisch leitend mit dem Sensor, insbesondere der Spule(n), verbunden. Unter "Ansteuerung des Sensors bzw. der Spule" ist zu verstehen, dass die Elektrik den Sensor, insbesondere die Spule, mit einem bestimmten Signal beaufschlagt und/oder dazu ausgebildet ist, ein im Sensor erzeugtes Signal, insbesondere in der Spule induziertes Signal, zu erfassen.

Die Elektrik umfasst vorzugsweise eine Elektronik. Die Elektronik umfasst insbesondere die Sende- und/oder Empfangseinheit. Die Elektronik umfasst bevorzugt eine elektronische Steuereinheit, insbesondere einen Prozessor oder Controller. Die Steuereinheit umfasst bevorzugt einen insbesondere nicht flüchtigen Speicher. Insbesondere ist die Elektronik aus mehreren Elektronikbauteilen zusammengesetzt. Die Elektronik ist insbesondere zu Ansteuerung des Sensors ausgebildet. Bei Verwendung von einer Spule bzw. mehreren Spulen erfolgt dabei die Ansteuerung der zumindest einen Spule, vorzugsweise aller Spulen. Dabei erfolgt insbesondere ein Beaufschlagen der Spule(n) mit einem Signal und oder ein Abnehmen eines Signals an der/den Spulen(n).

Erfindungsgemäß umfasst die Sensorvorrichtung neben dem Sensor zumindest einen Energiespeicher. Insbesondere handelt es sich hierbei um einen elektrochemischen Energiespeicher, insbesondere Batterie, insbesondere eine Knopfzelle, oder einen Akkumulator. Der Energiespeicher dient zumindest zur Stromversorgung des Sensors, vorzugsweise beispielsweise auch zur Stromversorgung der Sende- und/oder Empfangseinheit. Durch den Energiespeicher kann auf einen Anschluss auf eine externe Energieversorgung verzichtet werden. Somit ist die Sensorvorrichtung leicht zu installieren. Die Elektrik umfasst bevorzugt den Energiespeicher.

Erfindungsgemäß ist vorgesehen, dass eine Aktivität, insbesondere ein Ein- und Ausschalten, des Sensors abhängig von einer Zusatzinformation ausgestaltet ist.

Nur wenn diese Zusatzinformation einer Vorgabe entspricht oder wenn in einer bevorzugten Ausgestaltung mehrere Zusatzinformationen jeweils der zugehörigen Vorgabe entsprechen, wird der Sensor aktiviert. Dadurch kann Energie eingespart werden. Hierdurch erhöht sich die Lebensdauer des Energiespeichers. Somit ist das erfindungsgemäße Sensorsystem besonders wartungsarm.

Der Sensor arbeitet insbesondere nur in seinem aktivierten Zustand. In dem aktivierten Zustand wird der Sensor von elektrischen Strom durchflossen. Ist der Sensor nicht aktiviert, fließt kein elektrischer Strom, dessen Quelle der Energiespeicher ist, durch den Sensor. Ist der Sensor aktiviert, so wird ein Betriebszustand des Verschlusselements detektiert. Nur wenn der Sensor aktiviert ist, wird ein Betriebszustand des Verschlusselements detektiert. Das Detektieren des Betriebszustands durch den Sensor wird Synonym mit der Aktivität des Sensors im Rahmen dieser Offenbarung verwendet.

Wie eingangs erwähnt, ist das Verschlusselement vorzugsweise eine Tür oder ein Fenster. Zwischen dem Türblatt bzw. dem Fensterblatt, allgemein als Verschlusselementblatt bezeichnet, und dem umgebenden Verschlusselementrahmen ist der Verschlusselementspalt ausgebildet. Dieses Verschlusselementblatt kann "geöffnet" oder "geschlossen" sein. Des Weiteren weist das Verschlusselement vorzugsweise ein Riegelelement auf. Dieses Riegelelement ist beispielsweise ein Riegel oder eine Falle eines Einsteckschlosses im Türblatt. Das Riegelelement weist den Zustand "Riegel-Ausgefahren" oder "Riegel-Eingefahren" auf. In dem "Riegel-Ausgefahren"-Zustand ragt das Riegelelement weiter von dem Verschlusselementblatt ab als in dem "Riegel-Eingefahren" Zustand. Daraus ergeben sich die vier grundsätzlichen Betriebszustände des Verschlusselementes: Geöffnet-Riegel-Ausgefahren-Zustand, Geöffnet-Riegel-Eingefahren-Zustand, Geschlossen-Riegel-Ausgefahren-Zustand und Geschlossen-Riegel-Eingefahren-Zustand.

Am Beispiel der Tür ist insbesondere vorgesehen, dass im Türblatt ein Einsteckschloss angeordnet ist. In Richtung des Verschlusselementspalts schließt das Einsteckschloss mit dem Stulp ab. Auf der gegenüberliegenden Seite, im Verschlusselementrahmen montiert oder als integraler Bestandsteil des Verschlusselementrahmens, befindet sich das Schließblech. Aus dem Stulp heraus kann sich das Riegelelement erstrecken. Das Riegelelement erstreckt sich z. B. durch den Verschlusselementspalt hindurch entlang der Sensorachse bis in eine entsprechende Öffnung im Schließblech. Das Riegelelement ist insbesondere ein Riegel oder eine Falle. Beim Fenster gibt es entsprechende Elemente, die sich durch den Verschlusselementspalt hindurch bis in eine entsprechende Öffnung des Verschlusselementrahmens erstrecken können.

Insbesondere weist die Sensorvorrichtung, vorzugsweise an der höchsten bzw. dicksten Stellen, eine Höhe von höchstens 2,5 mm, bevorzugt höchstens 2,3 mm, besonders bevorzugt höchstens 2,1 mm, auf.

Die hier vorgestellte Sensorvorrichtung ist bevorzugt dazu ausgebildet, um in diesem Verschlusselementspalt angeordnet zu werden. Durch den erfindungsgemäßen Energiespeicher ist dieses besonders einfach möglich.

Insbesondere befindet sich die Sensorvorrichtung dabei auf einer dem Verschlusselementspalt zugewandten Seite eines ersten Verschlusselementteils, insbesondere des Verschlusselementblattes, insbesondere des Stulpes, oder des Verschlusselementrahmens, insbesondere des Schließblechs. Das gegenüberliegende Teil ohne Sensorvorrichtung wird als "zweites Verschlusselementteil" bezeichnet. Die Sensorvorrichtung ist dabei so angeordnet, dass die Sensorachse mit dem Riegelelement und der zugehörigen Öffnung fluchtet. Besonders bevorzugt ist die Sensorvorrichtung dabei verschlusselementblattseitig (insbesondere türblattseitig bzw. fensterblattseitig) angeordnet.

Vorzugsweise ist das Sensorsystem, insbesondere die Sensorvorrichtung, dazu ausgebildet verschiedene Betriebszustände des Verschlusselements zu detektieren, indem entsprechenden Sensorwerten zugehörige Betriebszustände zugeordnet sind. Das Sensorsystem kann insbesondere mittels des Sensors die Betriebszustände Geöffnet-Riegel-Ausgefahren-Zustand, Geöffnet-Riegel-Eingefahren-Zustand, Geschlossen-Riegel-Ausgefahren-Zustand und Geschlossen-Riegel-Eingefahren-Zustand detektieren.

Das Sensorsystem, insbesondere die Sensorvorrichtung, umfasst vorzugsweise einen elektronischen Datenspeicher. Der Datenspeicher ist insbesondere nicht flüchtig. In dem Datenspeicher kann von einem Benutzer zumindest ein Zeitplan, beispielsweise Zeitraum oder ein Zeitprofil, hinterlegt werden, in dem der Sensor zumindest einen Betriebszustand des Verschlusselements misst und entsprechend übermittelt. So kann in regelmäßigen oder unregelmäßigen Abständen, aufgrund eines vorab hinterlegten Zeitplans die Aktivierung des Sensors erfolgen. Insbesondere wird dabei auch die Sende- und/oder Empfangseinheit aktiviert, um die generierte Information von der Sensorvorrichtung nach außen, insbesondere zu der Erfassungseinheit, zu senden.

Des Weiteren ist bevorzugt vorgesehen, dass über die Sende- und/oder Empfangseinheit kabellos ein Befehl von einem Benutzer, insbesondere von einem mobilen Benutzergerät des Benutzers empfangbar ist. Die Sensorvorrichtung ist vorzugsweise dazu ausgebildet, im Ansprechen auf solch einen Befehl den Sensor zu aktivieren und mittels des Sensors zumindest einen Betriebszustand des Verschlusselements zu ermitteln.

Das Sensorsystem umfasst vorzugsweise die bereits beschriebene, außerhalb der Sensorvorrichtung angeordnete Erfassungseinheit. Diese Erfassungseinheit ist zur Kommunikation mit der Sende- und/oder Empfangseinheit ausgebildet. Der Befehl zum Aktivieren des Sensors wird insbesondere von dieser Empfangseinheit empfangen und über die Sende- und/oder Empfangseinheit weitergeleitet.

Bevorzugt ist die bereits beschriebene übergeordnete Recheneinheit vorgesehen, wobei von der Sensorvorrichtung der Betriebszustand bis zu dieser Recheneinheit übermittelt wird.

Die Recheneinheit ist bevorzugt dazu ausgebildet, über eine Aktivierung des Sensors zu entscheiden und ein entsprechendes Aktivierungssignal an die Sensorvorrichtung zu senden. Dementsprechend ist die Recheneinheit insbesondere dazu ausgebildet, die zumindest eine Zusatzinformation zu erfassen, ohne dabei mit der Sensorvorrichtung zu kommunizieren. Anders ausgedrückt, sitzt die Intelligenz, die entscheidet, ob der Sensor aktiviert wird, d.h. ob eine Betriebszustand des Verschlusselements mittels des Sensors zu ermitteln ist, zumindest teilweise in der Recheneinheit. Insbesondere kann die Recheneinheit im Besitz der Zusatzinformation sein, während der Sensorvorrichtung die Zusatzinformation nicht vorliegt. Hierdurch kann Energie gespart werden, da die Sensorvorrichtung die Zusatzinformation nicht verarbeiten muss. Vielmehr empfängt die Sensorvorrichtung einen Befehl der Recheneinheit, den Sensor zu aktivieren. Beispielsweise kann der Befehl der Recheneinheit lauten, den Sensor einmalig oder regelmäßig wiederkehrend zu aktivieren. Der Befehl der Recheneinheit kann auch lauten, den Sensor wiederkehrend regelmäßig in einem Zeitraum oder bis auf Weiteres zu aktivieren. Der Befehl der Recheneinheit kann zudem lauten, den Sensor wieder zu deaktivieren.

Die Zusatzinformation kann eine Information über zumindest einen Benutzer sein. Auch Zusatzinformationen über mehrere Benutzer können gesammelt werden und dann die Entscheidung über das Aktivieren basierend auf den mehreren Zusatzinformationen gefällt werden.

Bei der Information über den Benutzer handelt es sich vorzugsweise um eine Ortsinformation, insbesondere des Benutzergerätes des Benutzers. Bei dem Benutzergerät handelt es sich bevorzugt um das Mobiltelefon des Benutzers. Dabei handelt es sich insbesondere um eine Ortsinformation, z.B. basierend auf Satellitennavigationsdaten und/oder GSM-Ortung des Benutzergerätes. Die Ortsinformation kann beinhalten, dass der Benutzer in dem räumlichen Bereich, den das Verschlusselement verschließt, abwesend ist. Die Ortsinformation kann beinhalten, dass der Benutzer bzw. das Benutzergerät einen Abstand zu dem Verschlusselement einnimmt. Insbesondere wird ab einem Mindestabstand von dem Verschlusselement der Sensor aktiviert.

Darüber hinaus ist bevorzugt vorgesehen, dass das Sensorsystem, insbesondere die Recheneinheit, zur Kenntnisnahme über einen Zeitplan zumindest eines Benutzers ausgebildet ist und der Sensor in Abhängigkeit von dem Zeitplan beginnt und/oder beendet, den Betriebszustand des Verschlusselements zu ermitteln.

Der Zeitplan kann vom entsprechenden Benutzer hinterlegt werden. Die Hinterlegung erfolgt insbesondere in der Recheneinheit. Hierbei kann der Benutzer den Zeitplan an dem Benutzergerät eingeben, wobei das Benutzergerät den Zeitplan an die Recheneinheit weiterleitet. Der Zeitplan kann explizit für das Sensorsystem hinterlegt werden. Ferner kann der Zeitplan auch durch Auswerten eines digitalen Kalenders des Benutzers ermittelt werden. Der digitale Kalender, z. B. Outlook®, kann an dem Benutzergerät eingegeben werden. Das Benutzergerät kann den digitalen Kalender an die Recheneinheit weiterleiten.

Ist der Zeitplan explizit für das Sensorsystem hinterlegt worden, so bestimmt der Benutzer willentlich, dass in zumindest einem Zeitbereich des Zeitplans, z. B. nachts oder während der Arbeitswoche tagsüber, der Sensor aktiviert ist. Hierbei kann innerhalb des Zeitbereichs der Sensor regelmäßig den Betriebszustand ermitteln.

Wird der Zeitplan durch Auswerten des digitalen Kalenders ermittelt, so wird insbesondere bei Abwesenheiten des Benutzers in dem durch das Verschlusselement zu verschließenden räumlichen Bereich zumindest ein Zeitbereich festgelegt, in dem der Sensor aktiviert ist. Hierbei kann innerhalb des Zeitbereichs der Sensor regelmäßig den Betriebszustand ermitteln.

Des Weiteren ist bevorzugt vorgesehen, dass das Sensorsystem zur Kenntnisnahme von Informationen über mehrere Benutzer, insbesondere Ortsinformationen und/oder Zeitplaninformationen, ausgebildet ist und der Sensor nur dann aktiv ist, wenn die Informationen ergeben, dass die mehreren Benutzer in einem von dem Verschlusselement verschließbaren räumlichen Bereich abwesend sind. Beispielsweise müssen hierzu die Benutzergeräte der mehreren Benutzer jeweils einen Mindestabstand von dem Verschlusselement einhalten. Es muss somit eine überlappende oder gemeinsame Information über mehrere Benutzer vorliegen.

Beispielsweise kann in dem Sensorsystem, insbesondere in der Recheneinheit, eine Liste mit Benutzern hinterlegt sein. Nur wenn die Zeitplaninformationen aller hinterlegter Benutzer, einem Kriterium entsprechen, wird der Sensor aktiviert. Beispielsweise müssen die Zeitplaninformationen aller hinterlegter Benutzer ergeben, dass die hinterlegten Benutzer in dem räumlichen Bereich abwesend sind.

Des Weiteren ist bevorzugt vorgesehen, dass die Zusatzinformation einer Information über einen räumlichen Bereich, den das Verschlusselement verschließt, entspricht, wobei das Sensorsystem, insbesondere die Recheneinheit, zur Kenntnisnahme hinsichtlich des geografischen Ortes des räumlichen Bereichs ausgebildet ist. Des Weiteren ist das Sensorsystem, insbesondere die Recheneinheit, dazu ausgebildet, anhand des Orts Zeitpunkt für Sonnenaufgang und/oder Sonnenuntergang zu bestimmen. Dies erfolgt insbesondere durch Auswertung von Daten aus dem Internet. Das Aktivieren des Sensors erfolgt dann in Abhängigkeit von Sonnenaufgang und/oder Sonnenuntergang. Hierdurch entfällt die Notwendigkeit, einen Helligkeitssensor in der Sensorvorrichtung zu betreiben. Hierdurch kann Energie eingespart werden.

Bevorzugt ist vorgesehen, dass die Information über den räumlichen Bereich einer Raumreservierung entspricht bzw. eine Information über die Raumreservierung wiedergibt. Der Sensor wird z. B. zu Beginn der Raumreservierungszeit aktiviert. Hierdurch kann ermittelt werden, ob der Raum tatsächlich wie belegt verwendet wird, oder ob keine Nutzung vorliegt. Beispielsweise kann der Betriebszustand oder einem Betriebszustandsänderung in dem Zeitintervall, z. B. von mehreren Minuten, vor und nach Beginn der Raumbelegung überwacht werden. Auch dadurch kann relativ einfach erfasst werden, ob nun der Raum betreten wurde und entsprechend der Reservierung benutzt wird oder nicht. Der Betriebszustand oder die Information, dass der räumliche Bereich wie reserviert verwendet wird oder nicht, kann von dem Sensorsystem versendet werden. Hierdurch können Benutzer über die tatsächliche Raumbelegung informiert werden.

Des Weiteren ist bevorzugt vorgesehen, dass das Sensorsystem, insbesondere die Recheneinheit, dazu ausgebildet ist, anhand der Zusatzinformation einen Zeitbereich zu ermitteln, in dem der Sensor aktiv sein soll, und der Sensor während des gesamten Zeitbereichs den Betriebszustand des Verschlusselements regelmäßig ermittelt. Zusätzlich oder alternativ kann vorgesehen sein, dass nur bei einer Betriebszustandsänderung über die Sende- und/oder Empfangseinheit eine entsprechende Nachricht sendet.

Des Weiteren ist bevorzugt vorgesehen, dass die Sensorvorrichtung eine Detektionsvorrichtung umfasst. Mittels der Detektionsvorrichtung der Sensorvorrichtung wird eine Änderung bezüglich des Verschlusselements, insbesondere eine Beschleunigung, eine Helligkeitsänderung oder eine Änderung eines Magnetfelds, detektiert. Das Sensorsystem ermittelt auf die detektierte Änderung hin den Betriebszustand. Auch dadurch kann Energie eingespart werden. Die Detektionsvorrichtung ist insbesondere als ein Beschleunigungssensor ausgebildet.

Das Sensorsystem kann während des Zeitbereichs den Betriebszustand nur auf die durch die Detektionsvorrichtung detektierte Änderung hin detektieren und damit den Sensor aktivieren. Außerhalb des Zeitbereichs entfällt eine Detektion des Betriebszustands aufgrund einer durch die Detektionsvorrichtung detektierte Änderung. Alternativ aktiviert das Sensorsystem stets aufgrund einer durch die Detektionsvorrichtung detektierte Änderung den Sensor. Hierbei kann z. B. zusätzlich innerhalb des Zeitbereichs der Sensor regelmäßig aktiviert werden.

Das Vorhanden Sein der Detektionsvorrichtung kann trotz des Energiesparenden Verhaltens des Sensorsystems die Sicherheit des Systems gewährleisten. Insbesondere wenn die Sensorvorrichtung zur Befestigung auf dem Verschlusselement ausgebildet ist, kann die Sensorvorrichtung leicht von dem Verschlusselement entfernt werden. Der Sensor kann das Entfernen der Sensorvorrichtung von dem Verschlusselement detektieren. Befindet sich die Sensorvorrichtung auf dem Verschlusselement, so befindet sich die Sensorvorrichtung in der Betriebsposition.

Findet das Entfernen der Sensorvorrichtung dann statt, wenn der Sensor deaktiviert ist, so wird das Entfernen nur dann detektiert, wenn durch den Beschleunigungssensor zunächst der Sensor aktiviert wird. Anschließend kann der Sensor das Entfernen detektieren. Hierzu kann der Sensor neben den bereits erwähnten Betriebszuständen zusätzlich den Betriebszustand "Sensor außerhalb der Betriebsposition" ermitteln. Somit kann zur Detektion, ob die Sensorvorrichtung von dem Verschlusselement entfernt ist, derselbe Sensor wie zur Detektion, ob das Verschlusselement geöffnet oder geschlossen ist und/oder ob ein Riegelelement des Verschlusselements ausgefahren oder eingefahren ist, verwendet werden.

Im Folgenden wird die Funktionsweise der Sensorvorrichtung am Beispiel einer Tür und einem Sensor mit Spulen beschrieben. Allerdings ergibt sich selbige Funktionsweise bei der Anwendung an einem Fenster oder sonstigem Verschlusselemente. WO 2016/149723 A1 beschreibt einen Sensor und dessen Verwendung. Der gemäß vorliegender Erfindung verwendete Sensor kann gleich oder ähnlich ausgestaltet sein. Entsprechend kann insbesondere die Ansteuerung der Spule(n) aus WO 2016/149723 A1 auch für vorliegende Erfindung genutzt werden.

Wie bereits in WO 2016/149723 A1 beschrieben, wurde festgestellt, dass sich elektrische Messwerte an der zumindest einen Spule sowohl durch den Zustand des Riegelelements (in WO 2016/149723 A1 als Verriegelungselement bezeichnet) als auch in geringem Ausmaß durch den Türzustand ändern. Allein durch die elektrische Messung mittels des Sensors kann somit auf den Zustand des Riegelelements und auch auf den Türzustand geschlossen werden, ohne dass zusätzliche Taster oder Veränderungen am Riegelelement notwendig wären. Da die Spulenachse so angeordnet wird, dass die zumindest eine Spule vom Riegelelement durchdrungen werden kann, ist es möglich, mittels der Spule zu erfassen, ob sich nun das Riegelelement durch die Spule hindurch erstreckt oder nicht. Hierzu ist das Riegelelement selbstverständlich zumindest teilweise aus Metall. Die Impedanz ändert sich bei geschlossener Tür im Vergleich zu geöffneter Tür aufgrund der Nähe des teilweise metallenen zweiten Verschlusselementteils. Bei Anordnung der Sensorvorrichtung am Türblatt, insbesondere am Stulp, kann mittels des Sensors erfasst werden, ob sich der zumindest teilweise metallene Türrahmen, insbesondere das metallene Schließblech, in der Nähe der Spule befindet und somit die Tür geschlossen ist oder nicht. Bei Anordnung der Sensorvorrichtung am Türrahmen, insbesondere am Schließblech, kann mittels der Spule erfasst werden, ob das zumindest teilweise metallene Türblatt, insbesondere der metallene Stulp bzw. das metallene Schloss, sich in der Nähe der Spule befindet und somit die Tür geschlossen ist oder nicht.

Wenn eine möglichst geringe Bauhöhe durch die Spule(n) erreicht werden soll, ist es zweckmäßig, die Elektronik (Messvorrichtung in WO 2016/149723 A1) so auszubilden, dass sie zur Messung der Impedanz der Spule geeignet ist, während diese mit einem Wechselspannungssignal oder einem Wechselstromsignal beaufschlagt wird. Dabei kann der Sensor mit nur einer Spule ausgestattet werden, wodurch sich eine möglichst geringe Dicke der Sensorvorrichtung ergibt. Die Impedanz der Spule verändert sich, wenn das Riegelelement ein- bzw. ausgefahren wird und in geringem Ausmaß, wenn der teilweise metallene zweite Verschlusselementteil (durch Schließen der Türe) in den Bereich der Spule kommt. Die Impedanz der Spule kann mit vorgegebenen Werten verglichen werden.

Die Zuverlässigkeit der Bestimmung des Zustandes des Riegelelements und des Türblatts kann deutlich erhöht werden, indem mittels der Elektrik an die Spule nacheinander Signale unterschiedlicher Frequenz angelegt werden. Die Impedanz wird dann bei diesen unterschiedlichen Frequenzen bestimmt und diese mit vorgegebenen Werten verglichen. Wenn z. B. bei drei Frequenzen gemessen wird und von jeder Messung auf den Zustand des Riegelelements und ggf. auf den Türzustand geschlossen wird, kann bei unterschiedlichen Ergebnissen eine Mehrheitsentscheidung gefällt werden. Andererseits ist es auch oft möglich, dass zwei Zustände bei einer bestimmten Frequenz sehr ähnliche Messwerte liefern und somit kaum unterschieden werden können, sodass allein aus diesem Grund eine Messung bei verschiedenen Frequenzen angezeigt ist.

Wenn bei mehreren Frequenzen gemessen wird, erhöht sich folglich der Stromverbrauch, verglichen mit einer einzigen Messung. So kann es zweckmäßig sein, den Sensor mit zumindest zwei Spulen auszustatten. Die zumindest zwei Spulen sind dabei koaxial zueinander. Dabei handelt es sich um eine Sendespule und eine Empfangsspule. Die Sendespule wird mit Wechselstrom beaufschlagt. In der Empfangsspule wird die dabei induzierte Spannung erfasst. Die induzierte Spannung in der Empfangsspule ändert sich nämlich deutlicher als die Impedanz, insbesondere bei Änderung des Türzustandes. Auf diese Weise können Messungen bei verschiedenen Frequenzen vermieden werden, wodurch der Stromverbrauch minimiert werden kann.

Die Zuverlässigkeit kann noch weiter gesteigert werden, wenn eine weitere Empfangsspule vorgesehen ist, sodass an beiden Seiten der Sendespule jeweils eine Empfangsspule angeordnet ist. Mittels der Elektronik wird die Differenz der in den beiden Empfangsspulen induzierten Spannung erfasst, während die Sendespule mit Wechselstrom beaufschlagt ist.

Folglich ist bevorzugt vorgesehen, dass der Sensor drei Spulen oder vier Spulen umfasst. Bei der bevorzugten Ausgestaltung des Sensors mit zumindest drei Spulen werden die zumindest drei Spulen übereinander angeordnet. Die Spulen können koaxial zueinander angeordnet sein. Zumindest eine Sendespule befindet sich dabei, insbesondere symmetrisch, zwischen den beiden Empfangsspulen. Wenn sich nun ein Eisenkern (das Riegelelement) genau symmetrisch in dieser Anordnung befindet, wird in den beiden Empfangsspulen genau die gleiche Spannung induziert, die Differenzspannung zwischen den beiden Empfangsspulen ist daher 0. Wenn sich aber der Eisenkern in die eine oder andere Richtung verschiebt, wird die Anordnung asymmetrisch und es ergibt sich eine induzierte Differenzspannung an den beiden Empfangsspulen. Ebenso verändert sich die induzierte Differenzspannung bei geschlossener Tür im Verhältnis zu einer geöffneten Tür durch die Nähe des zweiten zumindest teilweise metallenen Verschlusselementteils. Es ist möglich, eine Sendespule zwischen den Empfangsspulen anzuordnen. Des Weiteren ist es auch möglich, zumindest zwei Sendespulen zwischen den beiden Empfangsspulen anzuordnen. Dabei sind die beiden Sendespulen insbesondere Teil eines gemeinsamen Stromkreises und/oder senden ein Signal aus. Ebenso können die beiden Empfangsspulen Teil eines gemeinsamen Stromkreises sein. Daher kann auch von einer Sendespule mit zwei Wicklungsbereichen und einer Empfangsspule mit zwei Wicklungsbereichen gesprochen werden.

Der Sensor kann, unabhängig von der Anzahl der Spulen, die Türzustände offen und geschlossen sowie die Riegelelementzustände Riegel-Eingefahren und Riegel-Ausgefahren erfassen. Somit kann die Sensorvorrichtung mittels des Sensors die Betriebszustände Geöffnet-Riegel-Ausgefahren, Geöffnet-Riegel-Eingefahren, Geschlossen-Riegel-Ausgefahren und Geschlossen-Riegel-Eingefahren detektieren. Dabei erfolgt mit der Elektronik zumindest das Bestromen der Spule und/oder das untermittelbare Erfassen der Impedanz bzw. induzierten Spannung. Die weiteren Auswertungen, beispielsweise der Vergleich mit hinterlegten charakteristischen Sensorwerten für die Betriebszustände kann ebenfalls in der Elektronik, insbesondere in der Steuereinheit, oder in der übergeordneten Recheneinheit erfolgen.

Bevorzugt kann das Sensorsystem, insbesondere die Sensorvorrichtung, den Betriebszustand "Sensor außerhalb der Betriebsposition" detektieren. In dem Betriebszustand "Sensor außerhalb der Betriebsposition" befindet sich der Sensor außerhalb der Betriebsposition. Insbesondere wird der Betriebszustand "Sensor außerhalb der Betriebsposition" durch Sensorwerte bestimmt, die einen Abstand zu dem ersten, zumindest teilweise metallenen Verschlusselementteil charakterisieren, wobei der Abstand größer ist als in der Betriebsposition.

Die Sensorvorrichtung umfasst Befestigungsmittel zur Befestigung an dem ersten Verschlusselementteil. Das Befestigungsmittel kann insbesondere als das Klebeelement ausgebildet sein. Umfasst der Sensor mehrere Empfangsspulen, so wird in der Empfangsspule, die zu dem Befestigungsmittel gewandt ist, bei einem Abstand zu dem ersten Verschlusselementteil, der größer ist als in der Betriebsposition, eine andere, insbesondere geringere, Spannung induziert, als in der Betriebsposition. Insbesondere ändert sich damit auch die Differenzspannung zwischen den beiden Empfangsspulen. Hierdurch lässt die der Betriebszustand "Sensor außerhalb der Betriebsposition" bestimmen.

Somit kann das Sensorsystem, insbesondere die Sensorvorrichtung, mittels des Sensors neben den Betriebszustände Geöffnet-Riegel-Ausgefahren, Geöffnet-Riegel-Eingefahren, Geschlossen-Riegel-Ausgefahren und Geschlossen-Riegel-Eingefahren einen weiteren Betriebszustand, nämlich den Betriebszustand "Sensor außerhalb der Betriebsposition" detektieren.

Nach der Montage der Sensorvorrichtung am Verschlusselement erfolgt vorzugsweise eine Inbetriebnahme (auch als Kalibrierung bezeichnet). Im Rahmen der Inbetriebnahme werden Sensorwerten, die mit dem Sensor der Sensorvorrichtung erfasst werden, zugehörige Betriebszustände zugeordnet. Dies ermöglicht dann nach der Inbetriebnahme, dass das Sensorsystem, insbesondere die Sensorvorrichtung, verschiedene Betriebszustände des Verschlusselements detektieren kann, , indem im Betrieb gemessene Sensorwerte mit den Sensorwerten, die bei der Inbetriebnahme zugehörige Betriebszustände zugeordnet wurden, verglichen werden. Stimmen die gemessenen Sensorwerte mit den Sensorwerten, die bei der Inbetriebnahme einem bestimmten Betriebszustand zugeordnet wurde, innerhalb von Fehlergrenzen überein, so schließt das Sensorsystem, insbesondere die Sensorvorrichtung hieraus, dass der bestimmte Betriebszustand vorliegt.

Bei den Betriebszuständen, die bei der Inbetriebnahme den Sensorwerten zugeordnet werden, kann es sich insbesondere um zumindest einen, bevorzugt mehrere, besonders bevorzugt alle der folgenden Betriebszustände: Geöffnet-Riegel-Ausgefahren, Geöffnet-Riegel-Eingefahren, Geschlossen-Riegel-Ausgefahren, Geschlossen-Riegel-Eingefahren handeln. Eine Zuordnung im Rahmen der Inbetriebnahme kann sinnvoll sein, um den Sensor an das spezifische Verschlusselement und/oder an das spezifische Riegelelement anzupassen. Diese insbesondere erstmalige Zuordnung erfolgt also nicht durch ein Einspielen von festen Zuordnungen in den Speicher des Sensorsystems, sondern das Sensorsystem ist vielmehr dazu ausgelegt, die Zuordnung von einem erfassten Sensorwert zu einem Betriebszustand selbstständig vorzunehmen. Das Sensorsystem ist insbesondere dazu ausgebildet, aufgrund einer Benutzereingabe und/oder einer sonstigen Information zu erkennen, in welchem Betriebszustand sich das Verschlusselement in einem bestimmten Moment befindet. Für den Betriebszustand "Sensor außerhalb der Betriebsposition" können schon vor der Inbetriebnahme charakteristische Werte in der Steuereinheit hinterlegt sein. Zusätzlich oder alternativ können Abweichungen von den Sensorwerten, die die Betriebszustände Geöffnet-Riegel-Ausgefahren, Geöffnet-Riegel-Eingefahren, Geschlossen-Riegel-Ausgefahren und Geschlossen-Riegel-Eingefahren charakterisieren, in dem Sensorsystem hinterlegt sein. Insbesondere können die Abweichungen vor der Inbetriebnahme in dem Sensorsystem hinterlegt sein. Sensorwerte, die zumindest den Abweichungen der während der Kalibrierung festgelegten Sensorwerte für die Betriebszustände Geöffnet-Riegel-Ausgefahren, Geöffnet-Riegel-Eingefahren, Geschlossen-Riegel-Ausgefahren und Geschlossen-Riegel-Eingefahren entsprechen, können den Betriebszustand "Sensor außerhalb der Betriebsposition" charakterisieren.

Des Weiteren ist bevorzugt vorgesehen, dass verschiedene Betriebsmodi von einem Benutzer konfigurierbar sind. Die unterschiedlichen Betriebsmodi definieren die Frequenz und somit die Häufigkeit der Aktivierung des Sensors. Beispielsweise kann ein Alarmmodus vom Benutzer aktiviert werden, bei dem in einer hohen Frequenz der Betriebszustand ermittelt wird, sodass sehr zeitnah erfasst werden kann, wenn die Tür geöffnet wird.

Die zuvor erläuterten Aktivierungsmöglichkeiten können gemeinsam in dem Sensorsystem vorgesehen sein. Es kann vorgesehen sein, dass mehrere der folgenden Aktivierungsmöglichkeiten gleichzeitig existieren: Aktivierung aufgrund eines Zeitplans eines Benutzers oder des zu verschließenden räumlichen Bereichs, Aktivierung aufgrund einer Ortsinformation eines Benutzergeräts von zumindest einem Benutzer, Aktivierung aufgrund eines Befehls des Benutzers, Aktivierung aufgrund eines Signals der Detektionsvorrichtung. Insbesondere wird aus Gründen der Sicherheit stets der Sensor aufgrund eines Signals der Detektionsvorrichtung aktiviert.

Des Weiteren ist bevorzugt vorgesehen, dass das Sensorsystem dazu ausgebildet ist, über einen Referenz-Zeitbereich in einzelnen Referenz-Zeitabschnitten eine Betriebszustandsänderung zu ermitteln und zu speichern und die Häufigkeit (auch: Frequenz) der Betriebszustandsermittlung in den darauffolgenden Zeitabschnitten an die Referenz-Zeitabschnitte anzupassen. Dadurch ist es möglich, dass das Sensorsystem erfasst, wie oft sich der Betriebszustand ändert. Ändert sich der Betriebszustand in dem entsprechenden Referenz-Zeitabschnitt relativ häufig, kann für zukünftige Zeitabschnitte die Häufigkeit der Aktivierung des Sensors bzw. der Ermittlung des Betriebszustandes erhöht werden. Bei dem Referenzzeitbereich kann es sich insbesondere um einen Tag oder um eine Stunde oder um mehrere Stunden handeln. Beispielsweise wird für jeden Wochentag einer Referenzwoche als Referenz-Zeitbereiche die Häufigkeit der Zustandsänderungen ermittelt und den darauffolgenden Wochen jeweils die Aktivität des Sensors an die an dem entsprechenden Wochentag der Referenzwoche angepasst. In einem weiteren Beispiel wird für jede Stunde eines Referenztages als Referenzzeitbereichs die Häufigkeit der Zustandsänderungen ermittelt und am darauffolgenden Tag die Aktivität des Sensor in einer bestimmten Stunde mit der Häufigkeit der Zustandsänderungen in der entsprechenden Stunde am Referenztag korreliert.

Es kann vorgesehen sein, dass die Sensorvorrichtung regelmäßig und benutzerunabhängig ein Signal über die Sende und/oder Empfangseinheit aussendet. Insbesondere kommunizieren die Sensorvorrichtung und die Erfassungseinheit regelmäßig miteinander. Hierbei handelt es sich um Lebenzeichensignale. Die Lebenszeichensignale können verschlüsselt sein und/oder eine U-ID umfassen. Hierdurch kann eine hohe Sicherheit erreicht werden, dass die Sensorvorrichtung vorhanden ist und/oder dass der Energiespeicher die Sensorvorrichtung mit ausreichend elektrischer Energie versorgt. So ist bevorzugt vorgesehen, dass die Aktivität des Sensors von der Zusatzinformation abhängt, nicht jedoch die Aktivität der Sende- und/oder Empfangseinrichtung.

Um Energie zu sparen, kann ferner vorgesehen sein, dass die Sensorvorrichtung Informationen über den Betriebszustand sammelt. Die Sensorvorrichtung kann, insbesondere ausschließlich, ausgebildet sein, die Informationen über den Betriebszustand mit dem Lebenszeichensignal zu versenden.

Die Aktivität, mit der die Sende- und/oder Empfangseinheit eine Information über den Betriebszustand versendet, kann hingegen von einer Zusatzinformation abhängig sein. So kann stets, wenn der Sensor aufgrund der Zusatzinformation aktiviert wird, die Sende- und/oder Empfangseinheit den Betriebszustand versenden. Dieses gilt insbesondere aufgrund eines Befehls eines Benutzers. Bei einer Aktivierung aufgrund eines Zeitplans oder einer Ortsinformation ist es hingegen denkbar, dass nur bei einer Änderung des Betriebszustands die Sende- und/oder Empfangseinheit den Betriebszustand versendet. Geht die Sensorvorrichtung von einem Manipulationsversuch aus, so wird stets der Betriebszustand von der Sende- und/oder Empfangseinheit versendet. Der versendete Betriebszustand wird insbesondere auf dem Benutzergerät angezeigt.

Vorzugsweise ist vorgesehen, dass die Sensorvorrichtung ein Gehäuse umfasst und der Energiespeicher innen an dem Gehäuse befestigt ist.

An der Sensorvorrichtung sind eine Vorderseite und eine Rückseite definiert. Insbesondere bildet ein Gehäuse der Sensorvorrichtung die Vorderseite und Rückseite, wobei insbesondere vorgesehen ist, dass das Gehäuse zumindest teilweise durch eine/mehrere Platine(n) und/oder einen Deckel und/oder ein Haltelement gebildet ist.

Die Vorderseite zeigt im montierten Zustand in den Verschlusselementspalt. Die Rückseite bildet eine Montagefläche, die zur Auflage am Verschlusselementblatt (insb. Stulp) oder Verschlusselementrahmen (insb. Schließblech) ausgebildet ist. Die entsprechende Fläche, insbesondere am Stulp oder Schließblech, zur Aufnahme der Sensorvorrichtung wird als "Auflagefläche" bezeichnet. Vorzugsweise ist die gesamte Rückseite als ebene Fläche ausgebildet und kann somit als Montagefläche, insbesondere zum Ankleben auf der Auflagefläche, verwendet werden.

Ferner kann die Vorderseite des Gehäuses stoffschlüssig mit einem elektrischen Leitungselement zum Leiten der elektrischen Energie von dem Energiespeicherelement verbunden sein.

Das Gehäuse kann eine elektrische Verbindung zwischen dem Energiespeicher und dem Prozessor umfasst. Insbesondere umfasst ein Teil des Gehäuses, das zumindest teilweise die Vorderseite des Gehäuses bildet und/oder stoffschlüssig mit der Vorderseite des Gehäuses verbunden ist, die elektrische Verbindung zwischen dem Energiespeicher und dem Prozessor. Die elektrische Verbindung kann innerhalb einer Platine, die einen Teil des Gehäuses bildet, ausgebildet sein.

Die Sensorvorrichtung umfasst vorzugsweise ein Speicherplatinenteil. Das Speicherplatinenteil ist zumindest zur elektrischen Kontaktierung des/der Energiespeicher(s) und/oder zum Leiten der elektrischen Energie von dem Energiespeicherelement ausgebildet.

Die Sensorvorrichtung kann ein Deckelelement umfassen. Das Deckelelement kann einen elektrischen Kontakt zum elektrischen Kontaktieren des Energiespeichers umfassen. Zusätzlich oder alternativ kann das Deckelelement zum Leiten des der elektrischen Energie von dem Energiespeicherelement ausgebildet sein.

Das Speicherplatinenteil und/oder das Deckelelement können der Vorderseite des Gehäuses bilden und/oder stoffschlüssig mit der Vorderseite des Gehäuses verbunden sein. Das Speicherplatinenteil und/oder das Deckelelement können stoffschlüssig mit einer Abschlussschicht, z. B. eine Lackschicht oder eine Folie, verbunden sein. Die Abschlussschicht ist dazu ausgebildet, dem Verschlusselementspalt zugewandt zu sein. Die Abschlussschicht befindet sich auf der gegenüberliegenden Seite des Befestigungsmittels.

Das Speicherplatinenteil und/oder ein Halteelelement können stoffschlüssig mit der Rückseite des Gehäuses verbunden sein. Insbesondere bildet das Klebeelement die Rückseite des Gehäuses.

Besonders bevorzugt sind sowohl die Vorderseite als auch die Rückseite des Gehäuses stoffschlüssig mit Leitungselementen zur Leitung der elektrischen Energie von dem Energiespeicher zu der Elektronik und/oder zu dem Sensor verbunden. Hierdurch kann die Sensorvorrichtung einerseits flach ausgebildet sein, um in dem Verschlusselementspalt angeordnet werden zu können. Andererseits wird der Raum ausgenutzt, um einen möglichst großes Energiespeicher in der Sensorvorrichtung anordnen zu können.

Besonders bevorzugt ist vorgesehen, dass sich die gesamte Elektrik lediglich auf einer Seite des Sensors anschließt. Insbesondere befindet sich dabei die Elektronik zwischen dem/den Energiespeicher(n) und dem Sensor. Im Gesamten ergibt sich somit entlang der oben definierten Raumrichtung eine Aneinanderreihung des Sensors mit anschließender Elektronik und abschließendem/n Energiespeicher(n).

Die Anordnung der Elektronik zwischen Sensor und Energiespeicher ermöglicht relativ kurze Leitungswege, da der Energiespeicher zunächst die Elektronik und die Elektronik dann wiederum den Sensor, insbesondere die Spule, bestromt.

Des Weiteren ist insbesondere vorgesehen, dass die Elektrik, aus Richtung der Sensorachse, insbesondere Spulenachse, betrachtet, neben dem Sensor, insbesondere neben der Spule, angeordnet ist. So ist insbesondere vorgesehen, dass die vollständige Elektrik, aus Richtung der Sensorachse, insbesondere Spulenachse, betrachtet, neben dem Sensor, insbesondere neben der Spule, angeordnet ist. Insbesondere ist vorgesehen, dass die Sensorachse, insbesondere Spulenachse, keinen Bestandteil der Elektrik schneidet. Insbesondere ist die Elektrik somit vollständig querab der Sensorachse, insbesondere Spulenachse, angeordnet.

Die Sensorvorrichtung, insbesondere umfassend den Sensor mit Spule und die Elektrik, ist somit vorzugsweise in einer Ebene angeordnet. Dadurch ergibt sich ein sehr dünner Aufbau der gesamten Sensorvorrichtung und es ist möglich, die Sensorvorrichtung in einem Verschlusselementspalt anzuordnen.

Im Folgenden werden unterschiedliche Platinenteile beschrieben. Die Platinenteile können eigenständige Platinen oder auch nur Abschnitte einer größeren Platine sein. Bevorzugt handelt es sich hierbei um harte bzw. steife Platinen, da diese, zumindest in bevorzugten Ausgestaltungen, auch als Gehäusebauteile verwendet werden. Auf und/oder in den Platinenteilen befinden sich Leiterbahnen.

So umfasst die Sensorvorrichtung vorzugsweise ein Elektronikplatinenteil. Die Elektronik ist auf diesem Elektronikplatinenteil angeordnet. Die Elektronik umfasst, wie bereits beschrieben, vorzugsweise mehrere Elektronikbauteile. Diese Elektronikbauteile können sich in einer Vergussmasse befinden. Diese Vergussmasse bildet dann eine entsprechende Schicht auf dem Elektronikplatinenteil.

Die Sensorvorrichtung umfasst vorzugsweise ein Sensorplatinenteil. Das Sensorplatinenteil nimmt den Sensor auf. Wie bereits beschrieben, umfasst der Sensor vorzugsweise zumindest eine Spule. Diese Spule befindet sich auf dem Sensorplatinenteil oder im Inneren des Sensorplatinenteils. So kann die zumindest eine Spule insbesondere durch Leiterbahnen gebildet sein, die in oder auf dem Sensorplatinenteil ausgebildet sind.

Ferner umfasst die Sensorvorrichtung vorzugsweise das Speicherplatinenteil. Das Speicherplatinenteil ist zumindest zur Kontaktierung des/der Energiespeicher(s) ausgebildet. Hierzu befindet sich auf dem Speicherplatinenteil vorzugsweise zumindest ein Energiespeicherkontakt. Der Energiespeicherkontakt ist insbesondere ein auf der Speicherplatine aufgesetztes Blechbauteil, das entsprechend mit einer Leiterbahn auf bzw. im Speicherplatinenteil elektrisch leitend verbunden ist. Besonders bevorzugt befindet/befinden sich auch der/die Energiespeicher unmittelbar auf dem Speicherplatinenteil und dabei in Kontakt mit dem/den Energiespeicherkontakt(en). Allerdings ist es gemäß einer Ausgestaltung auch möglich, den Energiespeicher in einem dem Speicherplatinenteil gegenüberliegenden Halteelement des Gehäuses anzuordnen. Im zusammengebauten Zustand der Sensorvorrichtung kontaktiert dann das Speicherplatinenteil, insbesondere mit dem/den entsprechenden Energiespeicherkontakt(en), direkt oder indirekt, den/die Energiespeicher.

In bevorzugter Ausgestaltung ist vorgesehen, dass das Elektronikplatinenteil und das Speicherplatinenteil einstückig ausgebildet sind und somit durch eine gemeinsame Platine gebildet sind.

Die hier vorgestellten Platinenteile erstrecken sich insbesondere in einer zur Sensorachse senkrechten Ebene.

Das Halteelement ist vorzugsweise auf oder an dem Elektronikplatinenteil und/oder dem Speicherplatinenteil stoffschlüssig befestigt ist.

Vorzugsweise ist vorgesehen, dass das Halteelement das Speicherplatinenteil und/oder Elektronikplatinenteil zumindest teilweise, insbesondere vollständig als Rahmen, umgibt.

Gemäß einer Variante, ist im Halteelement zumindest eine Energiespeicheraufnahme ausgebildet. Die Energiespeicheraufnahme ist als Durchgangsaussparungen im Halteelement ausgebildet. In der Energiespeicheraufnahme kann der Energiespeicher eingesetzt werden. Das Speicherplatinenteil verschließt vorzugsweise die Energiespeicheraufnahme auf einer Seite, insbesondere auf der Rückseite.

Vorzugsweise ist der einzelne Energiespeicherkontakt als Feder ausgebildet und presst den Energiespeicher gegen das Halteelement.

Die Aufgabe der Erfindung wird auch durch eine Anordnung mit einem Verschlusselement und einem erfindungsgemäßen Sensorsystem gelöst.

Die Erfindung wird nun anhand eines Ausführungsbeispiels näher beschrieben. Dabei zeigen:
- Figur 1: eine erfindungsgemäße Anordnung mit erfindungsgemäßer Sensorvorrichtung gemäß allen Varianten,
- Figuren 2 - 9: die erfindungsgemäße Sensorvorrichtung gemäß einer ersten Variante,
- Figur 10: die erfindungsgemäße Sensorvorrichtung gemäß einer zweiten Variante,
- Figuren 11 - 14: die erfindungsgemäße Sensorvorrichtung gemäß einer dritten Variante und
- Figur 15: die erfindungsgemäße Sensorvorrichtung gemäß einer vierten Variante.

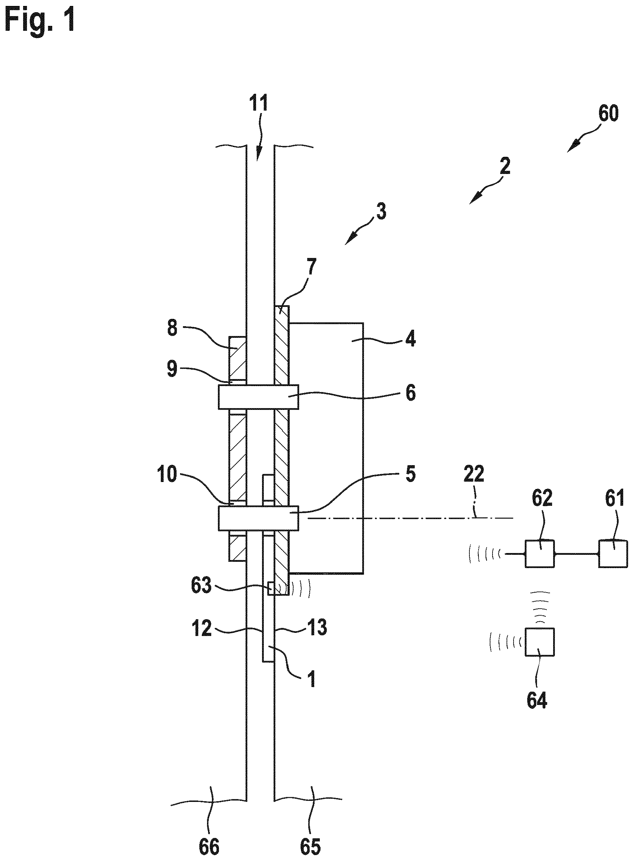

Figur 1 zeigt in rein schematischer Darstellung eine Anordnung 2. Die Anordnung 2 umfasst eine Sensorvorrichtung 1 und ein Verschlusselement 3, hier ausgebildet als Tür. Von dem Verschlusselement 3 ist lediglich ein Ausschnitt gezeigt.

Das Verschlusselement 3 umfasst ein Schloss 4 in einem Türblatt; allgemein als erstes Verschlusselementteil 65 bezeichnet. Das Schloss 4 wiederum weist einen Stulp 7 auf. In dem Schloss 4 befindet sich ein Riegelelement 5, hier ausgebildet als Riegel. Das Riegelelement 5 ist beispielsweise mit einem Schlüssel ein- und ausfahrbar. Das Riegelelement 5 ist entlang einer Spulenachse 22 verschiebbar. Diese Spulenachse 22 ist Teil der Sensorvorrichtung 1 und wird noch im Detail erläutert.

Das Schloss 4 kann ein weiteres Riegelelement 6, beispielsweise in Form einer Falle, aufweisen. Im gezeigten Ausführungsbeispiel durchdringt das Riegelelement 5 die Sensorvorrichtung 1. Allerdings kann die Sensorvorrichtung 1 auch so ausgebildet und angeordnet werden, dass das weitere Riegelelement 6 (Falle) die Sensorvorrichtung 1 durchdringt und mittels der Sensorvorrichtung 1 erfasst wird.

Dem Türblatt liegt der Rahmen, allgemein als zweites Verschlusselementteil 66 bezeichnet, der Anordnung 2 gegenüber. In diesem Rahmen befindet sich, als separates Bauteil oder integraler Bereich, das Schließblech 8. Das Schließblech 8 weist eine Fallenöffnung 9 und eine Riegelöffnung 10 auf. In diese Riegelöffnung 10 erstreckt sich das Riegelelement 5 im ausgefahrenen Zustand. Dementsprechend erstreckt sich das weitere Riegelelement 6 in die Fallenöffnung 9.

Zwischen Stulp 7 und Schließblech 8 ist im geschlossenen Zustand des Verschlusselements ein Verschlusselementspalt 11 ausgebildet. In diesem Verschlusselementspalt 11 befindet sich die Sensorvorrichtung 1. Hierbei befindet sich die Sensorvorrichtung 1 in der Betriebsposition.

Die Sensorvorrichtung 1 weist eine Vorderseite 12 und eine Rückseite 13 auf. Die Vorderseite 12 und Rückseite 13 sind insbesondere senkrecht zur Spulenachse 22 definiert. Die Rückseite 13 bildet die Montagefläche der Sensorvorrichtung 1 und ist auf einer Auflagefläche am Stulp 7 befestigt, insbesondere angeklebt. Die Sensorvorrichtung 1 und somit auch die Auflagefläche können sich über den Stulp 7 hinaus erstrecken.

Die Vorderseite 12 ist dem Verschlusselementspalt 11 zugewandt.

Figur 1 zeigt ferner ein Sensorsystem 60 umfassend die Sensorvorrichtung 1. Zusätzlich umfasst das Sensorsystem 60 auch eine übergeordnete Recheneinheit 61, eine Erfassungseinheit 62 und ein Benutzergerät 64, beispielsweise ein Mobiltelefon. Zur Verdeutlichung zeigt Figur 1 auch rein schematisch die Sende- und/oder Empfangseinheit 63 in der Sensorvorrichtung 1. Die Sende- und/oder Empfangseinheit 63 kommuniziert, insbesondere drahtlos, direkt mit der Recheneinheit 61 und/oder über die Erfassungseinheit 62 mit der Recheneinheit 61. Die Erfassungseinheit 62 befindet sich insbesondere im Kommunikationsbereich für eine drahtlose Datenübertragung mit der Sensorvorrichtung 1, beispielsweise in der Nähe der Tür. Die Erfassungseinheit 62 ist vorzugsweise kabelgebunden mit der Recheneinheit 61 zur Datenübertragung verbunden. Allerdings ist auch hier eine kabellose Übertragung möglich.

Das Benutzergerät 64 kann, insbesondere kabellos, direkt mit der Sende- und/oder Empfangseinheit 63 oder aber über die Recheneinheit 61 oder die Erfassungseinheit 62 mit der Sensorvorrichtung 1 kommunizieren.

In einer nicht dargestellten Variante ist es auch möglich, die Sensorvorrichtung 1 auf der anderen Seite, nämlich am Schließblech 8 entsprechend anzuordnen.

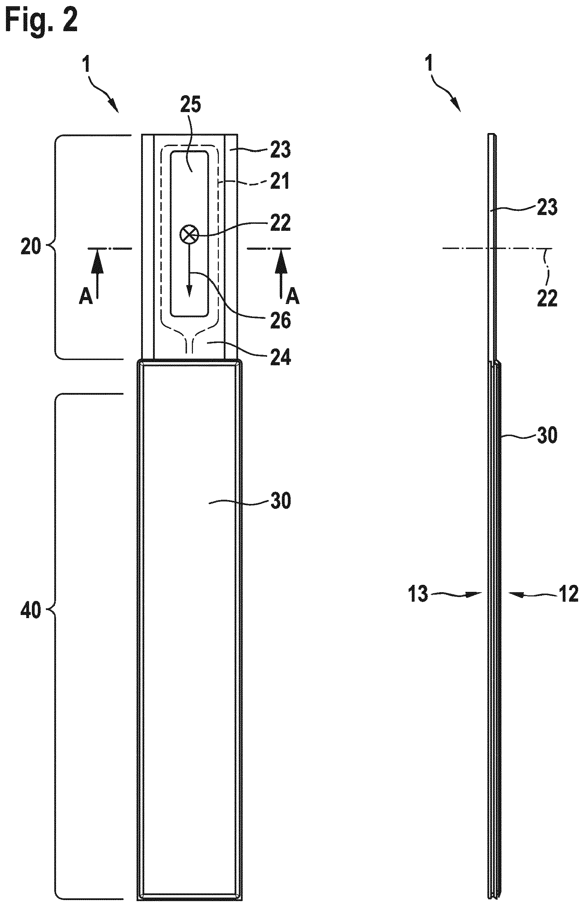

Die Figuren 2 bis 9 zeigen in unterschiedlichen Darstellungen den grundsätzlichen Aufbau der Sensorvorrichtung 1 sowie gewisse Besonderheiten der ersten Variante der Sensorvorrichtung 1.

Im Folgenden wird, soweit nicht explizit anders erwähnt, stets auf die Figuren 2 bis 9 Bezug genommen.

Die Sensorvorrichtung 1 umfasst einen Sensor 20. Der Sensor 20 wiederum weist zumindest eine Spule 21 auf, die hier nur rein schematisch dargestellt ist. Die Spule 21 definiert die Spulenachse 22. Insbesondere ist vorgesehen, dass die zumindest eine Spule 21 in oder auf einem Sensorplatinenteil 24 ausgebildet ist. Insbesondere ist die Spule 21 eine Leiterbahn im Sensorplatinenteil 24. Das Sensorplatinenteil 24 liegt auf einem Sockelelement 23. Das Sockelelement 23 ist in den ersten drei Ausführungsbeispielen insbesondere aus elektrisch nichtleitendem Material, insbesondere Kunststoff gebildet.

Sowohl das Sockelelement 23 als auch die Spule 21 und das Sensorplatinenteil 24 weisen eine Durchgangsaussparung 25 auf. Durch diese Durchgangsaussparung 25 erstreckt sich die Spulenachse 22.

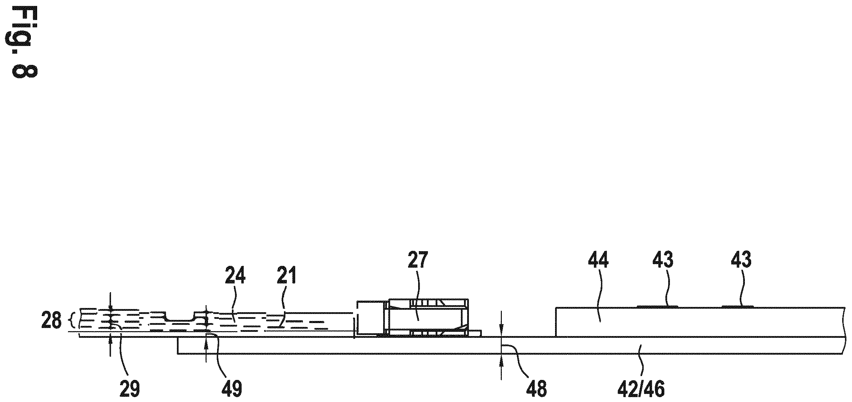

Die Sensorvorrichtung 1 ist in der Anordnung 2 insbesondere so angeordnet, dass sich das Riegelelement 5 durch diese Durchgangsaussparung 25 entlang der Spulenachse 22 erstrecken kann. Bevorzugt sind zumindest ein oder zwei Sendespule(n) und zwei Empfängerspule, die jeweils zumindest eine Wicklung, bevorzugt mehrere Wicklungen umfassen, in Richtung der Spulenachse 22 hintereinander angeordnet. Die Sendespule(n) wird/werden von den Empfängerspulen eingeschlossen. Somit ist ausgehend von der Rückseite 13 der Sensorvorrichtung 1 zunächst eine Empfängerspule, anschließend die Sendespule(n) und anschließend eine weitere Empfängerspule angeordnet. Der Aufbau mit drei Spulen 21 ist in Fig. 8 dargestellt.

In Figur 2, die eine Draufsicht auf die Vorderseite 12 darstellt, verdeckt die dargestellte Empfängerspule 21 die dahinterliegenden Sendespule(n) sowie die der Rückseite zugewandte weitere Empfängerspule. Durch die in den beiden Empfängerspulen induzierte Spannungsdifferenz ist es möglich, die Nähe von Metall des zweiten Verschlusselementteil 66 zu detektieren. Hierdurch kann detektiert werden, ob das Verschlusselement geöffnet oder geschlossen ist. Ferner kann durch eine Änderung der induzierten Spannung in den Empfängerspulen detektiert werden, ob das Riegelelement 5 ausgefahren oder eingefahren ist. Somit können mittels des Sensors 20 die Betriebszustände des Verschlusselements 3, nämlich ein Geöffnet-Riegel-Ausgefahren-Zustand, ein Geöffnet-Riegel-Eingefahren-Zustand, ein Geschlossen-Riegel-Ausgefahren-Zustand und ein Geschlossen-Riegel-Eingefahren-Zustand detektiert werden. Da der Metallanteil der Verschlusselementeteile 65, 66 und des Riegelelements 5 variieren können, werden bei der Inbetriebnahme der Sensorvorrichtung 1 die genannten Betriebszustände Sensorwerten, insbesondere Amplitudenänderungen und/oder Phasenverschiebungen der in den Empfängerspulen induzierten Spannungen oder Spannungsdifferenzen, zugeordnet. Somit wird bei der Inbetriebnahme die Sensorvorrichtung kalibriert.

Die Sensorvorrichtung weist eine Höhe in Richtung der Spulenachse 22 von höchstens 2,5 mm, bevorzugt 2,3 mm, besonders bevorzugt 2,1 mm auf.

Dadurch, dass die Sensorvorrichtung 1 auf dem Verschlusselementblatt 65 befestigt wird, benötigt die Sensorvorrichtung 1 eine eigenständige Energieversorgung in Form von Energiespeichern 45. Zur besseren Nachrüstbarkeit ist eine kabelgebundene Verbindung mit einer externen Energieversorgung nicht vorgesehen. Damit die Energiespeicher 45 möglichst selten ausgetauscht werden, ist erfindungsgemäß vorgesehen, den Sensor nur abhängig von einer Zusatzinformation zu aktivieren und damit den Betriebszustand zu ermitteln. Hierdurch wird ein kontinuierliches Messen des Betriebszustands vermieden, so dass Energie eingespart werden kann.

Die Zusatzinformation kann das Signal eines Beschleunigungssensors 53 der Sensorvorrichtung sein. Somit wird zunächst mittels des Beschleunigungssensors 53 detektiert, dass sich das Verschlusselement 3 und/oder die Sensorvorrichtung 1 bewegt. Daraufhin wird stets der Sensor 20 aktiviert und der Betriebszustand ermittelt. Hierbei kann auch ein Manipulationsversuch erkannt werden.

Um ein Entfernen der Sensorvorrichtung 1 von dem ersten Verschlusselementteil 65 als Manipulationsversuch zu detektieren, kann die Sensorvorrichtung 1 einen weiteren Betriebszustand detektieren, nämlich den Betriebszustand "Sensor außerhalb der Betriebsposition". Hierbei handelt es sich um einen Zustand, bei dem der Sensor 20 oder die gesamte Sensorvorrichtung 1 von dem ersten Verschlusselemententeil 65 entfernt wurde. Hierbei ändert sich insbesondere die induzierte Spannung, die in der Empfängerspule, die dem ersten Verschlusselemententeil 65 zugewandt ist, induziert wird. Typische Werte für den Betriebszustand "Sensor außerhalb der Betriebsposition", insbesondere der Amplituden und/oder der Phasenverschiebungen der induzierten Spannung der der Rückseite 13 zugewandten Empfängerspule und/oder der induzierten Spannungsdifferenzen der beiden Empfängerspulen, sind in einer elektronischen Steuereinheit der Sensorvorrichtung 1 bereits vor der Inbetriebnahme der Sensorvorrichtung 1 fest hinterlegt.

Ferner sind Abweichungen von den Sensorwerten, die die Betriebszustände Geöffnet-Riegel-Ausgefahren, Geöffnet-Riegel-Eingefahren, ein Geschlossen-Riegel-Ausgefahren und ein Geschlossen-Riegel-Eingefahren vor der Inbetriebnahme in der Steuereinheit hinterlegt. Die Abweichungen können als prozentuale oder absolute Abweichungen von den Sensorwerten für die Betriebszustände Geöffnet-Riegel-Ausgefahren, Geöffnet-Riegel-Eingefahren, ein Geschlossen-Riegel-Ausgefahren und ein Geschlossen-Riegel-Eingefahren definiert sein. Weichen die gemessenen Sensorwerte um die fest hinterlegten Abweichungen von den in der Kalibrierung festgelegten Sensorwerten für die Betriebszustände Geöffnet-Riegel-Ausgefahren, Geöffnet-Riegel-Eingefahren, ein Geschlossen-Riegel-Ausgefahren und ein Geschlossen-Riegel-Eingefahren ab, so wird ein Manipulationsversuch detektiert.

Um regelmäßig zu detektieren, ob eine elektrische Stromversorgung unterbrochen wurde, kommuniziert die Sensorvorrichtung 1 regelmäßig mit der Erfassungseinheit 62. Bei einem Ausbleiben der Kommunikation wird auf einen Manipulationsversuch geschlossen. Somit wird regelmäßig die elektrische Energieversorgung der Steuereinheit und der Sende- und/oder Empfangseinheit 63 der Sensorvorrichtung 1 überprüft, so dass ein Manipulationsversuch schnell entdeckt wird.

Der Recheneinheit 61 kann eine Information eines Benutzers vorliegen, dass der Benutzer die Aktivierung des Sensors wünscht. Einerseits kann der Benutzer einen Befehl zur Aktivierung des Sensors in das mobile Benutzergerät 64 eingeben, woraufhin über die Recheneinheit 61 und die Erfassungseinheit 62 der Befehl an die Sensorvorrichtung 1 weitergeleitet wird, woraufhin die Sensorvorrichtung 1 den Sensor 20 aktiviert. Andererseits kann der Benutzer einen Zeitplan, insbesondere über das mobile Benutzergerät 64, vorgeben. Der Zeitplan enthält Zeiträume, in denen der Sensor 20 insbesondere regelmäßig, aktiviert werden soll. Das Sensorsystem 60, insbesondere die Recheneinheit 61, speichert den Zeitplan, und versendet entsprechende Befehle, um den Sensor 20 innerhalb der Zeiträume zu aktivieren.

Anderseits kann das Sensorsystem 60, insbesondere die Recheneinheit 61, Informationen über den Benutzer erhalten und daraufhin beschließen, den Sensor 20 zu aktivieren, ohne dass der Benutzer dieses ohne einen Befehl zur Aktivierung des Sensors 20 oder ohne Vorgabe eines Zeitplans vorgibt.

Beispielsweise empfängt die Recheneinheit 61 Informationen über den Aufenthaltsort des Benutzergeräts 64. Ist der Aufenthaltsort entfernt von dem räumlichen Bereich, den das Verschlusselement 3 verschließt, so veranlasst die Recheneinheit 61 die Aktivierung des Sensors. Die Aktivierung kann einmalig erfolgen oder wiederholend solange, bis sich das Benutzergerät 64 dem räumlichen Bereich erneut genähert hat. Die Entfernung zu dem räumlichen Bereich, bei dem oder ab dem der Sensor 20 aktiviert wird und/oder ein Abstand des Benutzergeräts 64 zu dem Verschlusselement 1, ab dem der Sensor 20 aktiviert wird, ist in dem Sensorsystem 60, insbesondere in der Recheneinheit 61, hinterlegt.

In einem anderen Beispiel hat die Recheneinheit 61 Zugriff auf einen digitalen Kalender des Benutzers. Die Recheneinheit 61 veranlasst bei einem Termin im digitalen Kalender die Aktivierung des Sensors 20. Die Aktivierung kann einmalig erfolgen oder wiederholend solange, bis der Termin gemäß dem digitalen Kalender beendet ist. In der Recheneinheit 61 kann hinterlegt sein, nur bei bestimmten Arten von Terminen den Sensor zu aktivieren. Somit ermittelt das Sensorsystem 60 zumindest einen Zeitraum, in dem der Sensor zu aktivieren ist.

Um Energie zu sparen, wird innerhalb des Zeitraums die Aktivität des Sensors 20 ermittelt, jedoch sendet die Sensorvorrichtung 1 nur bei einer Änderung des Betriebszustands des Verschlusselements 3 den Betriebszustand über die Erfassungseinheit 62 an die Recheneinheit 61.

In dem Sensorsystem 60, insbesondere in der Recheneinheit 61, können mehrere Benutzer hinterlegt sein. Der Sensor 20 wird dabei aktiviert, wenn die Informationen über die hinterlegten Benutzer einer Vorgabe entsprechen, Beispielsweise wird der Sensor 20 aktiviert, wenn die Benutzergeräte 64 mehrere oder alle hinterlegten Benutzer von dem räumlichen Bereich entfernt sind. Z. B. weisen hierbei die Benutzergeräte 64 zumindest einen hinterlegten Abstand zu dem Verschlusselement 3 auf. In einem anderen Beispiel wird der Sensor 20 nur aktiviert, wenn die digitalen Kalender mehrerer oder aller hinterlegten Benutzer angeben, dass sich die Benutzer in einem Termin oder in einer bestimmten Art von Termin befinden. In einem weiteren Beispiel wird der Sensor 20 aktiviert, wenn von mehreren Benutzern entweder bekannt ist, dass sich das Benutzergerät 64 entfernt von dem räumlichen Bereich befindet oder sich der Benutzer gemäß dem digitalen Kalender in einem Termin oder einer bestimmten Art von Termin befindet.

Das Sensorsystem 60, insbesondere die Recheneinheit 61, kann alternativ oder zusätzlich die Aktivierung des Sensors 20 von einer Information über den räumlichen Bereich abhängig machen. Beispielsweise liegt dem Sensorsystem 60, insbesondere der Recheneinheit 61, ein digitaler Kalender über die Raumnutzung, d. h. über die Reservierung, des räumlichen Bereichs, vor. Das Sensorsystem 60, insbesondere die Recheneinheit 61, aktiviert zu Beginn einer Reservierung, oder in einem Zeitraum am Beginn der Reservierung, den Sensor 20. Hierdurch erhält das Sensorsystem 60 den Betriebszustand des Verschlusselements 3 zu Beginn der Reservierung bzw. in einem Zeitraum am Beginn der Reservierung. Der Zeitraum kann z. B. +/- 10 Minuten des Reservierungsbeginns entsprechen. Hieraus kann das Sensorsystem 60 einen Rückschluss ziehen, ob der räumliche Bereich wie reserviert verwendet wird und dem Benutzer den Betriebszustand oder eine Information basierend auf dem Rückschluss zur Verfügung stellen. Die Information kann z. B. "Raum belegt" oder "Raum frei" enthalten.

In einem anderen Beispiel liegt der Recheneinheit 61 der geographische Ort des räumlichen Bereichs vor. Anhand des geographischen Orts ermittelt die Recheneinheit 61 die Zeit des Sonnenaufgangs und des Sonnenuntergangs und aktiviert den Sensor 20 insbesondere einmal zu der Zeit des Sonnenauf- und/oder untergangs.

Es sind verschiedene Betriebsmodi des Sensorsystems 60 von dem Benutzer einstellbar, in denen die Frequenz der Aktivität des Sensors 20 variiert. Ferner kann alternativ oder zusätzlich das Sensorsystem 60 selbstständig die Frequenz der Aktivität des Sensors 20 variieren. Hierbei kann das Sensorsystem 60 in einem Referenzzeitbereich in einzelnen Referenz-Zeitabschnitten die Häufigkeit der Betriebszustandsänderungen ermitteln. Beispielsweise kann innerhalb einer Woche als Referenzzeitbereich jeweils an einzelnen Tagen als Referenz-Zeitabschnitte oder innerhalb eines Arbeitstages als Referenzzeitbereich in jeweils einzelnen Stunden als Referenzzeitabschnitte jeweils die Häufigkeit der Betriebszustandsänderungen ermittelt werden. In darauffolgenden entsprechenden Zeitabschnitten, also entsprechenden Wochentagen oder Stunden, kann die Aktivität des Sensors 20 an die Häufigkeit der Referenz-Zeitabschnitte angepasst sein. Wurde in dem Referenzzeitabschnitt eine geringe Häufigkeit gemessen, so wird in dem darauffolgenden Zeitabschnitt der Sensor selten oder gar nicht aktiviert. Wurde in dem Referenzzeitabschnitt eine große Häufigkeit gemessen, so wird in dem darauffolgenden Zeitabschnitt der Sensor häufig aktiviert.

In dem Ausführungsbeispiel der Figuren 2 bis 9, weisen sowohl das Sockelelement 23 als auch die Spule 21 und das Sensorplatinenteil 24 eine Durchgangsaussparung 25 auf. Durch diese Durchgangsaussparung 25 erstreckt sich die Spulenachse 22.

Die Sensorvorrichtung 1 ist in der Anordnung 2 insbesondere so angeordnet, dass sich das Riegelelement 5 durch diese Durchgangsaussparung 25 entlang der Spulenachse 22 erstrecken kann.

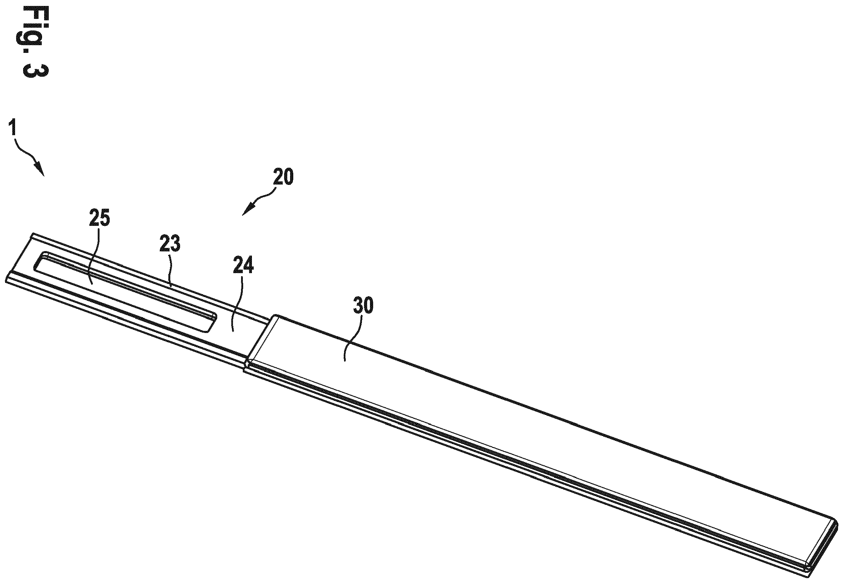

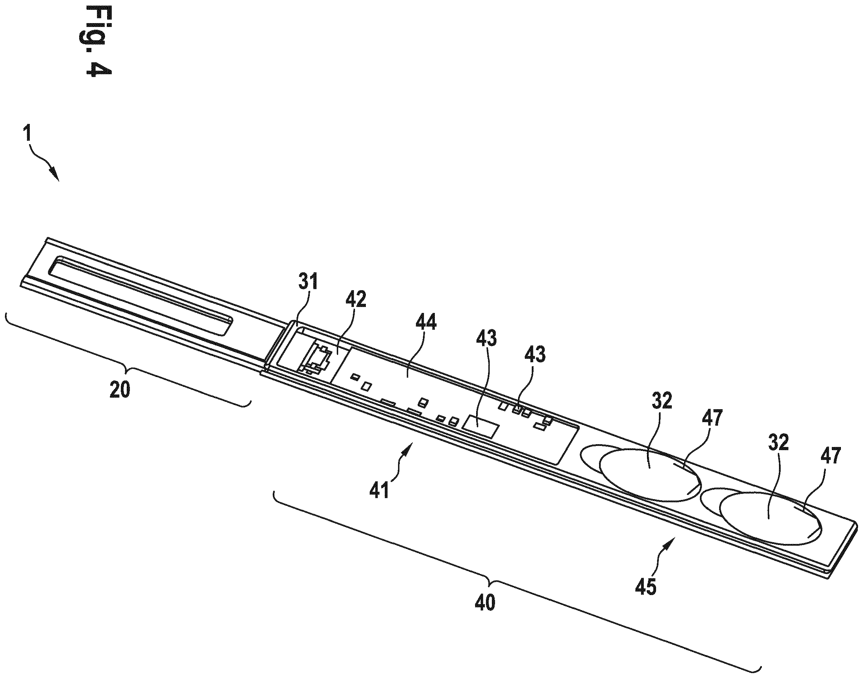

Neben dem Sensor 20 umfasst die Sensorvorrichtung 1 eine Elektrik 40. Diese Elektrik 40 ist mit einem Deckel 30 verschlossen. Figuren 2 und 3 zeigen diesen Deckel 30. In Figur 4 ist der Deckel 30 ausgeblendet.

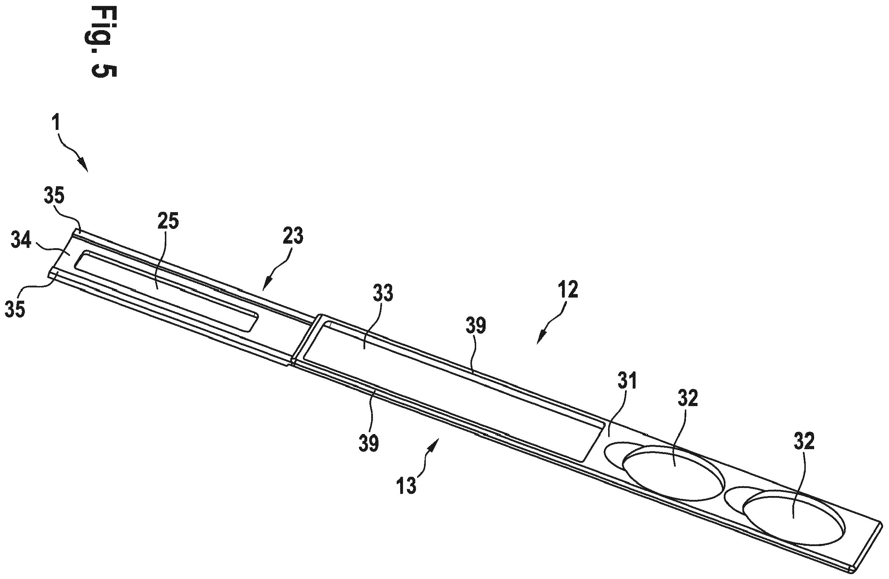

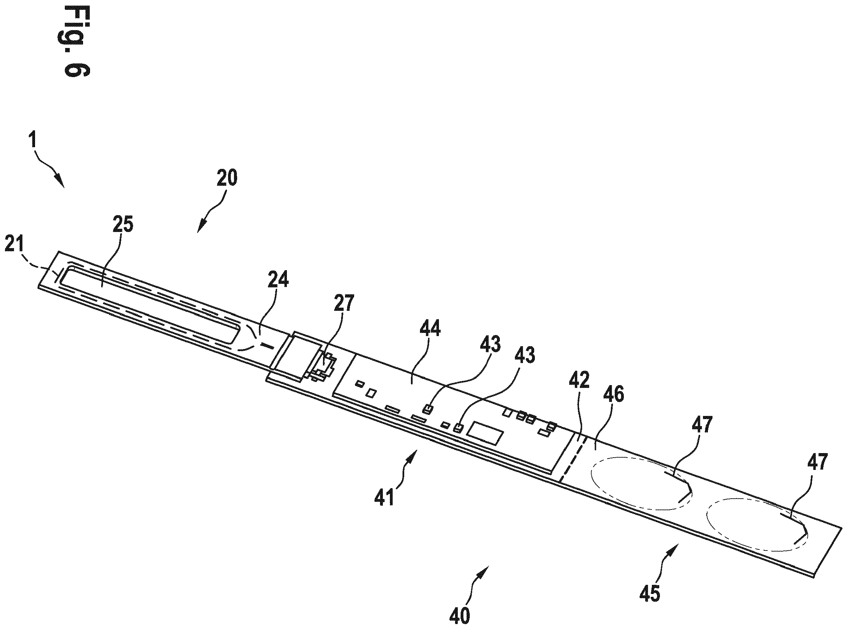

Die Sensorvorrichtung 1 umfasst ein Halteelement 31, insbesondere aus Kunststoff. Insbesondere bilden das Halteelement 31 und das Sockelelement 23 ein einstückiges Bauteil. Figur 5 zeigt das Halteelement 31 in Alleinstellung. In Figur 6 sind der Deckel 30 und das Halteelement 31 ausgeblendet.

Wie insbesondere die Figuren 4 und 6 zeigen, umfasst die Elektrik 40 eine Elektronik 41 und zwei Energiespeicher 45. Die Energiespeicher 45 sind hier als Knopfbatterien ausgebildet.

Die Elektronik 41 setzt sich zusammen aus mehreren Elektronikbauteilen 43, die auf einem Elektronikplatinenteil 42 angeordnet sind. Die Elektronikbauteile 43 befinden sich in einer Vergussmasse 44.

Das Elektronikplatinenteil 42 ist einteilig mit einem Speicherplatinenteil 46 ausgestaltet. Lediglich der Übersichtlichkeit halber ist in Figur 6 eine gestrichelte, imaginäre Grenze zwischen Elektronikplatinenteil 42 und Speicherplatinenteil 46 eingezeichnet.

Auf dem Speicherplatinenteil 46 befinden sich für die beiden Energiespeicher 45 Energiespeicherkontakte 47. Wie beispielsweise Figur 4 zeigt, sind im Halteelement 31 zwei Energiespeicheraufnahmen 32 ausgebildet. Die beiden Energiespeicheraufnahmen 32 sind Durchgangsaussparungen im Halteelement 31. In diese Energiespeicheraufnahmen 32 können die beiden Energiespeicher 45 eingesetzt werden und können dabei durch die Energiespeicherkontakte 47 kontaktiert werden. Leitungselemente werden durch das Speicherplatinenteil 46 zu dem Elektronikplatinenteil 42 und damit zur Elektronik geführt.

Des Weiteren bildet das Haltelement eine Elektronikaussparung 33, ebenfalls ausgebildet als Durchgangsaussparung, umgeben von Seitenwänden 39. In diese Elektronikaussparung 33 ragt die Elektronik 41, insbesondere die Vergussmasse 44 mit den Elektronikbauteilen 43.

Die elektrisch leitende Verbindung zwischen Elektronikplatinenteil 42 und Sensorplatinenteil 24 erfolgt hier über eine Steckverbindung 27. Diese Steckverbindung 27 erstreckt sich ebenfalls in die Elektronikaussparung 33 des Halteelements 31.

Wie beispielsweise Figur 2 zeigt, ist die gesamte Elektrik 40 auf einer Seite des Sensors 20 angeordnet. Figur 2 zeigt hierzu eine Raumrichtung 26, die senkrecht zur Spulenachse 22 definiert ist und die Spulenachse 22 schneidet. Entlang dieser Raumrichtung 26 sind die Elektronik 41 und die Energiespeicher 45 angeordnet. Die Elektronik 41 befindet sich dabei zwischen den Energiespeichern 45 und dem Sensor 20.

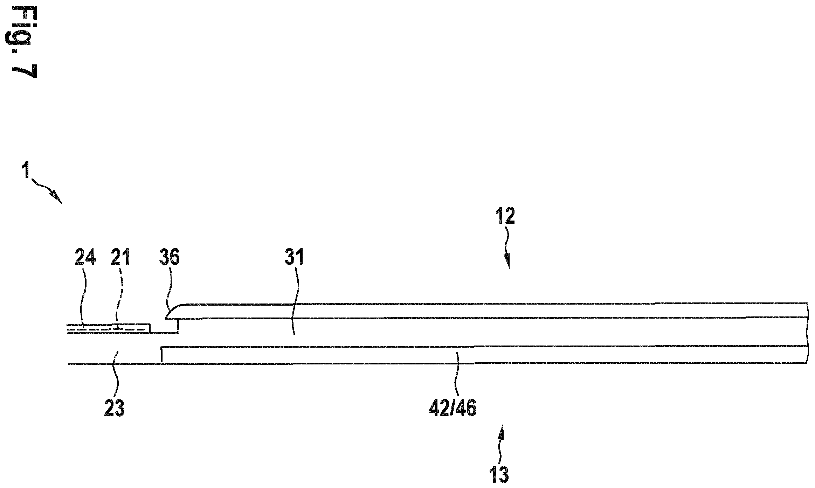

Figur 7 zeigt im Detail den Bereich zwischen Sensor 20 und Elektrik 40. Der Deckel 30 ist dabei ausgeblendet. Hierbei ist gut zu sehen, dass das Halteelement 31 an der Vorderseite 12 eine Halteelementkrempe 36 aufweist. Diese Halteelementkrempe 36 umgibt die Elektrik 40, insbesondere die Elektronikaussparung 33 und die Energiespeicheraufnahmen 32. Auf die Haltelementkrempe 36 kann der Deckel 30, insbesondere in einer elastischen Ausgestaltung, beispielsweise aus Silikon, aufgesteckt werden. Die Ränder des Deckels 30 umgreifen im aufgesteckten Zustand die Halteelementkrempe 36.

Der Deckel 30 und der Sensorplatinenteil 34 bilden somit die Außenseite und somit auch das Gehäuse der Sensorvorrichtung 1 auf der Vorderseite 12.

Die Rückseite 13, somit die Montagefläche und das rückseitige Gehäuse der Sensorvorrichtung 1 ist durch ein Klebeelement, das stoffschlüssig mit dem Sockelelement 23 und der Außenseite des Elektronikplatinenteils 42 und Speicherplatinenteils 46 ausgebildet ist, gebildet.

Figur 8 zeigt dieselbe Darstellung wie Figur 7, jedoch ohne Halteelement 31. Die beiden Figuren 7 und 8 verdeutlichen den Versatz zwischen Elektronikplatinenteil 42 und Spule(n) 21. In Figur 8 sind beispielhaft drei Spulen 21 eingezeichnet. In der gezeigten Variante sind alle Spulen (21) nicht nur versetzt, sondern weisen sogar einen Abstand 49 zum Elektronikplatinenteil 42 auf.

Figur 8 zeigt ferner einen Spulenbereich 28, in dem sich die drei Spulen 21 befinden. Dieser Spulenbereich 28 ist insbesondere Bestandteil des Sensorplatinenteils 24. Der Spulenbereich 28 erstreckt sich vom oberen Ende der obersten Spule 21 bis zum untersten Ende der untersten Spule 21. Der Spulenbereich 28 weist parallel zur Spulenachse 22 eine erste Höhe 29 auf. Das Elektronikplatinenteil 42 erstreckt sich parallel zur Spulenachse 22 über eine zweite Höhe 48. Diese zweite Höhe 48 ist bevorzugt kleiner als die erste Höhe 29.

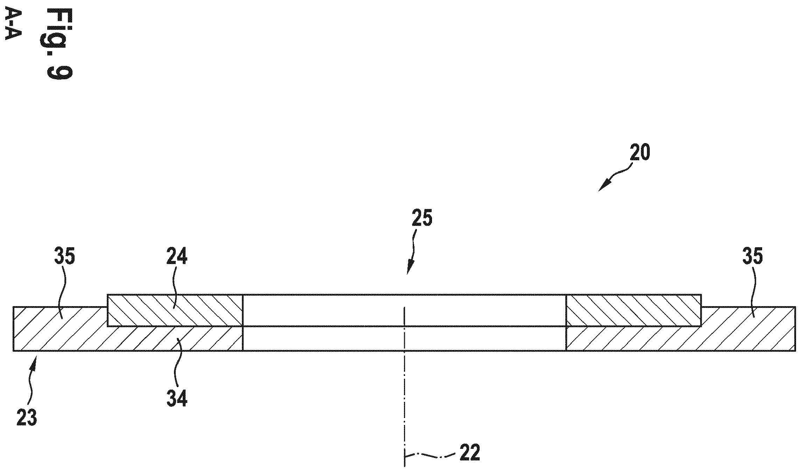

Figur 9 verdeutlicht den in Figur 2 gekennzeichneten Schnitt A:A. An dieser Darstellung ist der genaue Aufbau des Sockelelements 23 gut zu erkennen. Das Sockelelement 23 umfasst demgemäß die Sockelplatte 34 zur Aufnahme des Sensorplatinenteils 24. Seitlich des Sensorplatinenteils 24 sind zwei Seitenschienen 35 des Sockelelements 23 zur formschlüssigen Aufnahme des Sensorplatinenteils 34 angeordnet.

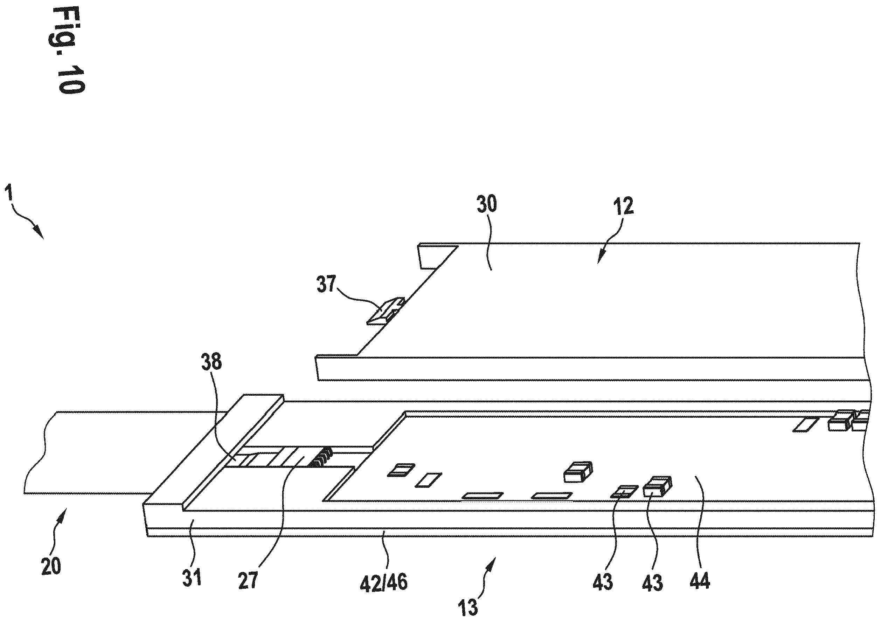

Figur 10 zeigt eine Variante der Sensorvorrichtung 1. Der grundsätzliche Aufbau der Sensorvorrichtung 1 ist hier wie in den Figuren 2 bis 9 beschrieben. Lediglich der Deckel 30 und seine Verbindung mit dem Halteelement 31 ist hier anders ausgestaltet. Der Deckel gemäß Figur 10 wird senkrecht zur Spulenachse 22 entgegen der Raumrichtung 26 auf das Halteelement 31 aufgeschoben. Der Deckel 30 weist eine Rastzunge 37 auf. Im Halteelement 31 ist eine Zungenaufnahme 38 ausgebildet. Im geschlossenen Zustand rastet die Rastzunge 37 in die Zungenaufnahme 38 ein.

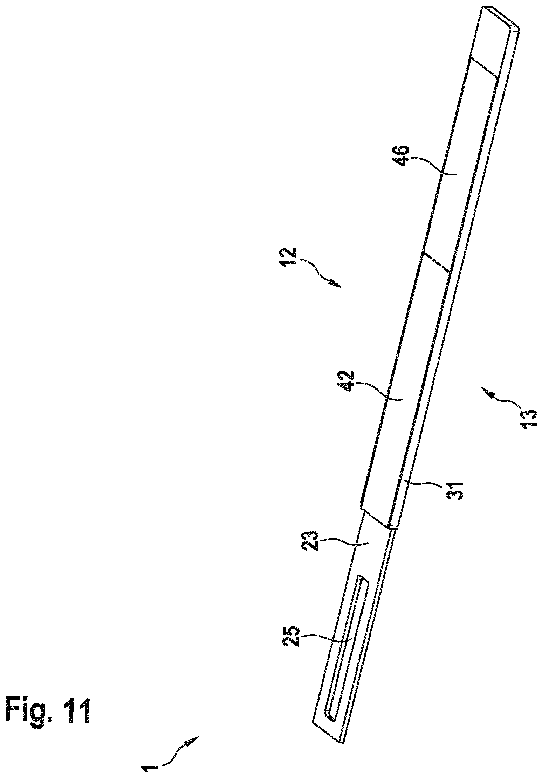

Die Figuren 11 bis 14 zeigen eine Variante der Sensorvorrichtung 1, bei der nicht das rückseitige Gehäuse durch die Außenseiten des Elektronikplatinenteils 42 und Speicherplatinenteils 46, sondern das vorderseitige Gehäuse mit diesen Elementen gebildet wird. Demgemäß fungieren hier die beiden Platinenteile 42, 46 auch als Deckel und bilden insofern einen Teil des Gehäuses.

Somit ist der Energiespeicher 45 stets unmittelbar innen an dem Gehäuse befestigt. Die elektrischen Leiter, die den Energiespeicher 45 mit der Elektronik 41 und dem Sensor 20 verbindet, sind in den Gehäusebauteilen angeordnet, die die Vorderseite 12 und/oder die Rückseite 13 des Gehäuses bilden bzw. stoffschlüssig mit der Vorderseite 12 und/oder Rückseite 13 verbunden sind.

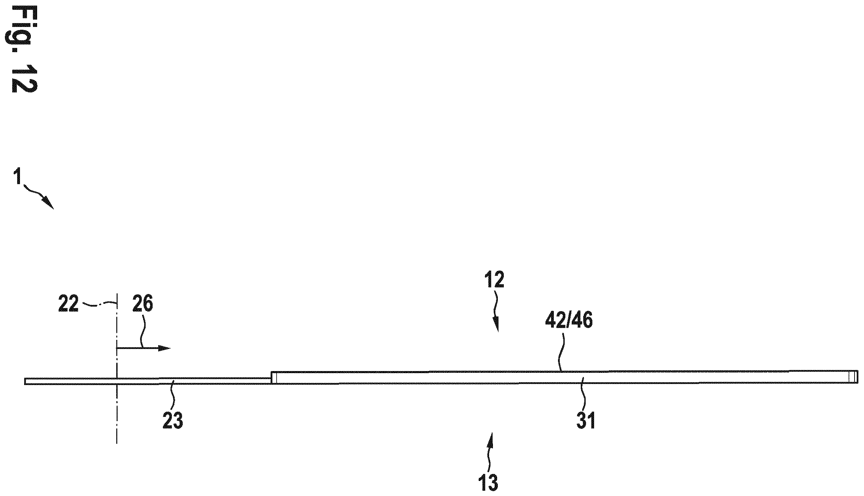

Figuren 11 und 12 zeigen die geschlossene Sensorvorrichtung 1. Das Sensorplatinenteil 24 ist hier wie in den vorhergehenden Varianten ausgestaltet, der Übersichtlichkeit halber jedoch nicht gezeigt.

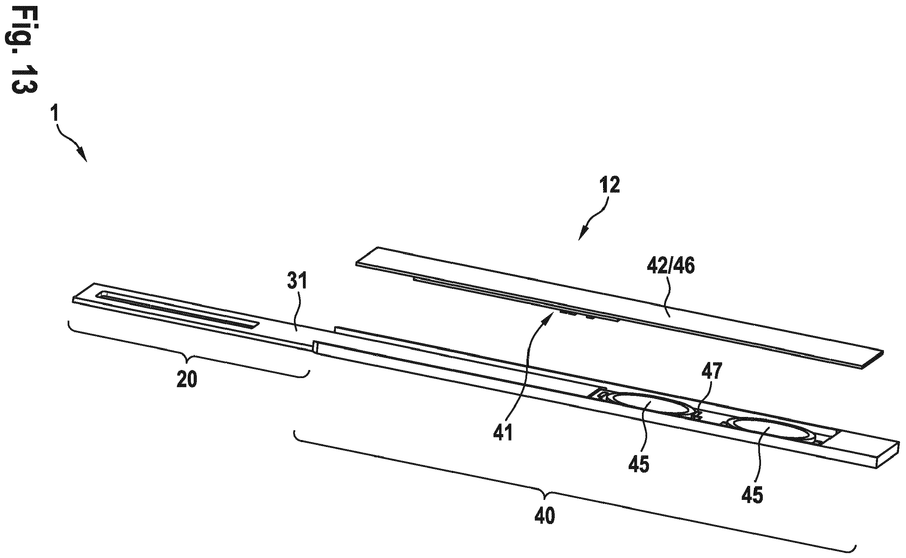

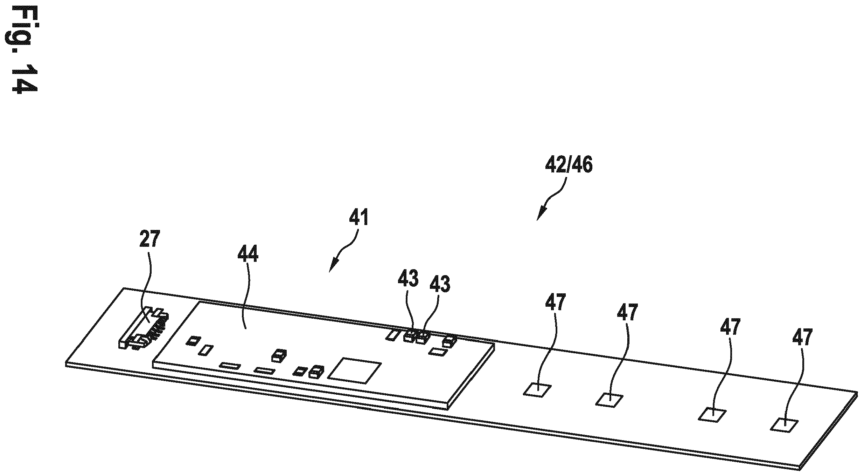

Figur 13 zeigt eine Explosionsdarstellung. Figur 14 zeigt lediglich die Innenseite des Elektronikplatinenteils 42 und Speicherplatinenteils 46, auch hier in einer einstückigen Ausgestaltung.

In der Variante gemäß den Figuren 11 bis 14 bildet die Außenseite des Haltelements 31 das Gehäuse auf der Rückseite 13 der Sensorvorrichtung. Auch hier ist das Haltelement 31 einstückig mit dem Sockelelement 32 ausgebildet.

An der Vorderseite 12 wird das Haltelement 31 durch das Elektronikplatinenteil 42 und das Speicherplatinenteils 46 verschlossen. Die außenliegende Seite dieser Platinenteile 42, 46 bildet somit das Gehäuse der Sensorvorrichtung auf der Vorderseite 12.

Die beiden Energiespeicher 45 werden hier in das Haltelement 31 eingesetzt. Wie insbesondere Figur 14 zeigt, befinden sich auf dem Speicherplatinenteil 46 entsprechende Energiespeicherkontakte 47. Diese Energiespeicherkontakte 47 können im zusammengebauten Zustand der Sensorvorrichtung 1 die Energiespeicher 45 direkt oder indirekt kontaktieren. Für die indirekte Kontaktierung befinden sich im Haltelement 31 ebenfalls Energiespeicherkontakte 47, die den elektrisch leitenden Kontakt zwischen Speicherplatinenteil 46 und Energiespeicher 45 herstellen.

Wie Figur 14 ebenfalls zeigt, befindet sich die Elektronik 41 mit Elektronikbauteilen 43 und Vergussmasse 44 auf der Innenseite des Elektronikplatinenteils 42.

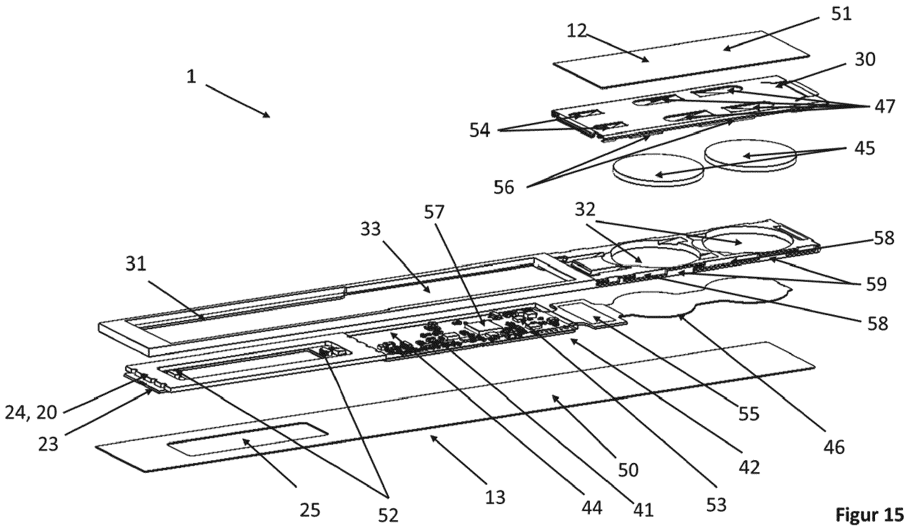

Figur 15 zeigt ein viertes Ausführungsbeispiel einer erfindungsgemäßen Sensorvorrichtung 1 in einer Explosionsdarstellung. Hierbei werden im Folgenden insbesondere die Gemeinsamkeiten und die Unterschiede zu dem ersten Ausführungsbeispiel der Figuren 2-9 erläutert.

Die Sensorvorrichtung 1 umfasst ein Klebeelement 50, das wie in dem ersten Ausführungsbeispiel die Rückseite 13 der Sensorvorrichtung 1 bildet. Eine Platine ist einstückig und stoffschlüssig mit dem Klebeelement 50 verbunden. Hierbei ist die Platine an dem Klebeelement 50 angeklebt.

Die Platine umfasst das Speicherplatinenteil 46 und das Elektronikplatinenteil 42. Das Speicherplatinenteil 46 und das Elektronikplatinenteil 42 sind somit einstückig und materialeinheitlich ausgebildet. Ferner ist eine Sockelplatte 23 einstückig und materialeinheitlich mit dem Elektronikplatinenteil 42 und dem Speicherplatinenteil 46 ausgebildet. Auf der Sockelplatte 23 ist das Sensorplatinenteil 24 angeordnet. Das Sensorplatinenteil 24 ist stoffschlüssig mit der Sockelplatte 23 verbunden, insbesondere angelötet. Das Sensorplatinenteil 24 enthält die Spulen 21, wobei zumindest ein oder zwei Sendespule(n) 21 zwischen zwei Empfangsspulen 21 innerhalb des Sensorplatinenteils 24 angeordnet sind. Hierbei sind die Empfangs-und Sendespulen 21 mit derselben oder parallelen Spulenachsen 22 ausgebildet.

Die Spulen 21 sind elektrisch und stoffschlüssig mit der Sockelplatte 23 verbunden, insbesondere angelötet. Über die Sockelplatte 23 sind die Spulen 21 mit der Elektrik 40, d. h der Elektronik 41 und den Energiespeichern 45, verbunden. Zugleich beanstandet die Sockelplatte 23 die Spulen 21 von der Rückseite 13 der Sensorvorrichtung 1. Die Sockelplatte ist als Teil der Platine ausgebildet.

Eine Lichtschranke 52 ist innerhalb des Sensorplatinenteils 24 angeordnet. Mittels der Lichtschranke 52 kann die Stellung des Riegelelements 5 zusätzlich zu den als Spulen 21 ausgebildeten Sensors 20 detektiert werden. Es ist aber auch denkbar, dass vierte Ausführungsbeispiel ohne Lichtschranke 52 auszugestalten und die Betriebszustände nur mittels des Sensors 20 zu detektieren.

Das Halteelement 31 ist auf dem Klebelement 50 befestigt.

Das Halteelement 31 ist als ein Kunststoffrahmen ausgebildet. Das Halteelement 31 bildet die Elektronikaussparung 33 als Durchgangsöffnung aus, die als Wanne für die Vergussmasse 44 dient. Zudem umrahmt die Elektronikaussparung 33 auch den Sensor 20.

Das Halteelement 31 bildet die Energiespeicheraufnahme 32 als Durchgangsöffnung aus. Innerhalb der Energiespeicheraufnahme 32 sind die Energiespeicher 45 angeordnet. Auf dem Speicherplatinenteil 46 sind erste elektrische Kontakte für einen ersten Pol der Energiespeicher 45 ausgebildet. Elektrische Leitungselemente führen in oder auf dem Speicherplatinenteil 46 zu der Elektronik. An dem zweiten Pol der Energiespeicher 45 liegen Energiespeicherkontakte 47 an.

Anders als in dem Ausführungsbeispiel der Figuren 2-9, sind die Energiespeicherkontakte 47 als elastische Zungen eines Deckels 30 ausgebildet. Der Deckel 30 ist elektrisch leitend, insbesondere metallisch. Der Deckel 30 umfasst Kontaktzungen 54, so dass der elektrische Strom von dem zweiten Pol der Energiespeicher 45 über die Energiespeicherkontakte 47 zu den Kontaktzungen 54 fließen kann. Die Kontaktzungen 54 liegen federnd und elektrisch kontaktierend an einem Kontaktfeld 55 des Speicherplatinenteils 46 an. Von dem Kontaktfeld führen elektrische Leitungselemente in oder auf dem Speicherplatinenteil 46 zu der Elektronik.

Das Klebeelement 50, die Platine 42, 46 und das Halteelement 31 bilden zusammen ein rückseitiges Gehäuseteil.

Dadurch, dass die Energiespeicherkontakte 47 und die Kontaktzungen 54 federnd ausgebildet sind und unter mechanischer Spannung an dem Energiespeicher 45 bzw. an dem Kontaktfeld 55 anliegen, ist der Stromfluss gewährleistet. Zudem drücken die Energiespeicherkontakte 47 die Energiespeicher 45 an die elektrische Kontakte für den ersten Pol, so dass auch hier der Stromfluss gewährleistet ist.

Zur elektrischen Isolierung des Deckels 30 ist der Deckel 30 mit einer nicht leitenden Folie 51 stoffschlüssig verbunden, insbesondere beklebt. Die Folie 51 bildet einen Teil der Vorderseite 12 der Sensorvorrichtung 1. Die Folie 51 und der Deckel 30 bilden zusammen ein vorderseitiges Gehäuseteil.

Des Weiteren wird die Vorderseite 12 von der Vergussmasse 44 und dem Sensorplatinenteil 24 gebildet. Es ist alternativ und nicht dargestellt möglich, die Vergussmasse 44 und eventuell das Sensorplatinenteil 24 mit der Folie 51 zu bedecken. Hierdurch ist die Sende- und/oder Empfangseinheit 63 und der Sensor 20 mit der Vorderseite 12 und der Rückseite 13 stoffschlüssig verbunden. Im Bereich der Elektronik 41 und des Sensors 20 ist die Sensorvorrichtung 1 gehäusefrei ausgebildet, d. h. Vorder- und Rückseite 12, 13 sind stoffschlüssig miteinander verbunden.

Der Deckel 30 wird an dem Halteelement 31 reversibel lösbar, insbesondere formschlüssig befestigt. Hierzu umfasst der Deckel 30 Verbindungselement 56, die durch Aussparungen 59 des Halteelements 31 geführt werden können. Danach wird durch Verschieben des Deckels 30 die Verbindungselemente 56 in Formschluss mit Vorsprüngen 58 des Halteelements 31 gebracht und damit befestigt. Die Verbindungselemente 56 und die Vorsprünge 58 sind derart ausgebildet, so dass die Energiespeicherkontakte 47 und die Kontaktzungen 54 bei geschlossenem Deckel mechanisch gespannt sind.

Bei den Ausführungsbeispielen der Figuren 2 bis 9 und 10 kann der Deckel 30 Vorsprünge aufweisen, die die Energiespeicher 45 gegen das Speicherplatinenteil drücken.

### Bezugszeichenliste

- 1: Sensorvorrichtung
- 2: Anordnung
- 3: Verschlusselement
- 4: Schloss
- 5: Riegelelement
- 6: weiteres Riegelelement
- 7: Stulp
- 8: Schließblech
- 9: Fallenöffnung
- 10: Riegelöffnung
- 11: Verschlusselementspalt
- 12: Vorderseite
- 13: Rückseite
- 20: Sensor
- 21: Spule
- 22: Spulenachse
- 23: Sockelelement
- 24: Sensorplatinenteil
- 25: Durchgangsaussparung
- 26: Raumrichtung
- 27: Steckverbindung
- 28: Spulenbereich
- 29: erste Höhe
- 30: Deckel
- 31: Halteelement
- 32: Energiespeicheraufnahme
- 33: Elektronikaussparung
- 34: Sockelplatte
- 35: Seitenschienen
- 36: Haltelementkrempe
- 37: Rastzunge
- 38: Zungenaufnahme
- 39: Seitenwände
- 40: Elektrik
- 41: Elektronik
- 42: Elektronikplatinenteil
- 43: Elektronikbauteile
- 44: Vergussmasse
- 45: Energiespeicher
- 46: Speicherplatinenteil
- 47: Energiespeicherkontakte
- 48: zweite Höhe
- 49: Abstand
- 50: Klebeelement
- 51: Folie
- 52: Lichtschranke
- 53: Beschleunigungssensor
- 54: Kontaktzungen
- 55: Kontaktfeld
- 56: Verbindungselemente
- 57: Steuereinheit
- 58: Vorsprung
- 59: Aussparung
- 60: Sensorsystem
- 61: Recheneinheit
- 62: Erfassungseinheit
- 63: Sende- und/oder Empfangseinheit
- 64: Benutzergerät
- 65: erstes Verschlusselementteil
- 66: zweites Verschlusselementteil

## Patentansprüche

1. Sensorsystem (60) für ein Verschlusselement (3), insbesondere eine Tür oder ein Fenster,
• mit einer Sensorvorrichtung (1), die einen Sensor (20) umfasst,
• und mit einem Energiespeicher (45) zur Stromversorgung des Sensors (20),
**dadurch gekennzeichnet,**
• **dass** eine Aktivität des Sensors (20) abhängig von einer Zusatzinformation ausgestaltet ist.

2. Sensorsystem nach Anspruch 1, **dadurch gekennzeichnet, dass** das Sensorsystem (60), insbesondere die Sensorvorrichtung (1), einen elektronischen Datenspeicher umfasst, wobei in dem Datenspeicher von einem Benutzer zumindest ein Zeitraum hinterlegbar ist, in dem der Sensor (20) zumindest einen Betriebszustand des Verschlusselements zu ermitteln hat.

3. Sensorsystem nach einem der vorhergehenden Ansprüche, **dadurch gekennzeichnet, dass** über die Sende- und/oder Empfangseinheit (63) kabellos ein Befehl von einem Benutzer, insbesondere von einem mobilen Benutzergerät (64) des Benutzers, von der Sensorvorrichtung (1) empfangbar ist, wobei die Sensorvorrichtung (1) dazu ausgebildet ist, im Ansprechen auf den Befehl mittels des Sensors (20) zumindest einen Betriebszustand des Verschlusselements (3) zu ermitteln, wobei das Sensorsystem (60) vorzugsweise eine außerhalb der Sensorvorrichtung (1) angeordneten Erfassungseinheit (62) umfasst und die Sende- und/oder Empfangseinheit (63) zur Kommunikation mit der Erfassungseinheit (62) ausgebildet ist, wobei insbesondere die Erfassungseinheit (62) zum Empfang des Befehls und zur Weiterleitung an die Sende- und/oder Empfangseinheit (63) ausgebildet ist.

4. Sensorsystem nach einem der vorhergehenden Ansprüche, **dadurch gekennzeichnet, dass** über die Sende- und/oder Empfangseinheit (62) der Betriebszustand des Verschlusselements (3) an eine übergeordnete Recheneinheit (61) übermittelbar ist, wobei sich die Recheneinheit (61) außerhalb der Sensorvorrichtung (1) befindet und die Recheneinheit (61) über eine Aktivität des Sensors (20) entscheidet, wobei insbesondere die Recheneinheit (61) zum Erfassen der Zusatzinformation ohne Kommunikation mit der Sensorvorrichtung (1) ausgebildet ist.

5. Sensorsystem nach einem der vorhergehenden Ansprüche, **dadurch gekennzeichnet, dass** die Zusatzinformation eine Information über zumindest einen Benutzer ist.

6. Sensorsystem nach Anspruch 5, **dadurch gekennzeichnet, dass** die Information über den Benutzer einer Ortsinformation, bevorzugt einer Ortsinformation eines Benutzergeräts (64), insbesondere Mobiltelefons, des Benutzers, besonders bevorzugt basierend auf Satellitennavigationsdaten und/oder GSM Ortung, entspricht.

7. Sensorsystem nach einem der vorhergehenden Ansprüche, **dadurch gekennzeichnet, dass** das Sensorsystem (60), insbesondere die Recheneinheit (61), zur Kenntnisnahme über einen Zeitplan, insbesondere eines digitalen Kalenders, zumindest eines Benutzers ausgebildet ist und der Sensor (20) in Abhängigkeit von dem Zeitplan beginnt und/oder beendet, den Betriebszustand des Verschlusselements (3) zu ermitteln.

8. Sensorsystem nach einem der vorhergehenden Ansprüche, **dadurch gekennzeichnet, dass** das Sensorsystem (60) zur Kenntnisnahme von Informationen über mehrere Benutzer, insbesondere Ortsinformationen und/oder Zeitplaninformationen, ausgebildet ist und der Sensor (20) nur dann aktiv ist, wenn die Informationen ergeben, dass die mehreren Benutzer in einem von dem Verschlusselement (3) verschließbaren räumlichen Bereich abwesend sind.

9. Sensorsystem nach einem der vorhergehenden Ansprüche, **dadurch gekennzeichnet, dass** die Zusatzinformation einer Information über einen Raum, für dessen Verschluss das Verschlusselement (3) vorgesehen ist, entspricht, wobei das Sensorsystem (60), insbesondere die Recheneinheit (61), zur Kenntnisnahme, an welchem geographischen Ort der Raum liegt, ausgebildet ist, und anhand des Orts Sonnenaufgang und/oder Sonnenuntergang bestimmt und der Sensor (20) bei Sonnenaufgang und/oder Sonnenuntergang aktiv ist.

10. Sensorsystem nach einem der vorhergehenden Ansprüche, **dadurch gekennzeichnet, dass** das Sensorsystem (60), insbesondere die Recheneinheit (61), dazu ausgebildet ist, anhand der Zusatzinformation einen Zeitbereich zu ermitteln, in dem der Sensor (20) aktiv sein soll, und der Sensor (20) während des gesamten Zeitbereichs den Betriebszustand des Verschlusselement (3) regelmäßig ermittelt und nur bei einer Betriebszustandsänderung über die Sende- und/oder Empfangseinheit (62) eine Nachricht sendet.

11. Sensorsystem nach einem der vorhergehenden Ansprüche, **dadurch gekennzeichnet, dass** die Sensorvorrichtung (1), insbesondere während des gesamten Zeitbereichs, mittels einer Detektionsvorrichtung eine Änderung bezüglich des Verschlusselements (3), insbesondere eine Beschleunigung, eine Helligkeitsänderung oder eine Änderung eines Magnetfeldes, detektiert und der Sensor (20) auf die detektierte Änderung hin den Betriebszustand ermittelt, wobei detektierbar ist, ob die Sensorvorrichtung von dem Verschlusselement entfernt ist, wobei insbesondere zur Detektion, ob die Sensorvorrichtung von dem Verschlusselement entfernt ist, derselbe Sensor wie zur Detektion, ob das Verschlusselement geöffnet oder geschlossen ist und/oder ob ein Riegelelement des Verschlusselements ausgefahren oder eingefahren ist, verwendet wird.

12. Sensorsystem nach einem der vorhergehenden Ansprüche, **dadurch gekennzeichnet, dass** verschiedene Betriebsmodi von dem Benutzer konfigurierbar sind, von denen die Frequenz der Aktivität des Sensors (20) abhängt.

13. Sensorsystem nach einem der vorhergehenden Ansprüche, **dadurch gekennzeichnet, dass** das Sensorsystem (60) dazu ausgebildet ist, über einen Referenz-Zeitbereich in einzelnen Referenz-Zeitabschnitten eine Betriebszustandsänderung zu ermitteln und zu speichern und die Häufigkeit der Betriebszustandsermittlung in den darauffolgenden Zeitabschnitten an die Referenz-Zeitabschnitte angepasst ist.

14. Sensorsystem nach einem der vorhergehenden Ansprüche, **dadurch gekennzeichnet, dass** die Sensorvorrichtung (1) regelmäßig und benutzerunabhängig ein Lebenzeichensignal über die Sende und/oder Empfangseinheit (63) aussendet, wobei die Sensorvorrichtung (1) abhängig von einer Zusatzinformation eine Information über den Betriebszustand versendet und/oder die Information über den Betriebszustand sammelt und insbesondere ausschließlich mit dem Lebenszeichensignal versendet.

15. Sensorsystem nach einem der vorhergehenden Ansprüche, **dadurch gekennzeichnet, dass** der Sensor (20) zumindest eine Spule (21), bevorzugt mehrere Spulen (21), umfasst.
